# EUROPEAN PATENT APPLICATION

(11) **EP 4 697 152 A1**
(43) Date of publication of application: **18.02.2026**
(21) Application number: 24858003.7
(22) Date of filing: 27.06.2024
(51) Int. Cl.: G06F 3/04886

(54) **WINDOW DISPLAY METHOD AND ELECTRONIC DEVICE**

(30) Priority: 29.08.2023 CN 202311102415; 01.09.2023 CN 202311138690
(71) Applicant: Huawei Technologies Co., Ltd., Shenzhen, Guangdong 518129 (CN)
(72) Inventor: CHENG, Yiyi, Shenzhen, Guangdong 518129 (CN); ZHU, Pei, Shenzhen, Guangdong 518129 (CN); XU, Rongtao, Shenzhen, Guangdong 518129 (CN)
(74) Representative: Gill Jennings & Every LLP
(86) International application number: PCT/CN2024/101991
(87) International publication number: WO 2025/044459

(57) **Abstract**

A window display method and an electronic device are disclosed, and relate to the field of electronic device technologies, so that a display region of a child window can be adjusted. A specific solution includes: An electronic device may display a first window in response to an operation of starting a target application, where the first window includes a second window and a third window that are displayed in parallel. Then, the electronic device may receive a first operation performed on the second window, where the first operation is used to trigger displaying of a child window of the second window; and display the child window of the second window in response to the first operation, where the child window of the second window covers a part of a region in which the second window is located and a part of a region in which the third window is located.

## Description

This application claims priorities to Chinese Patent Application No. 202311102415.5, filed with the China National Intellectual Property Administration on August 29, 2023 and entitled "WINDOW DISPLAY METHOD AND ELECTRONIC DEVICE", and to Chinese Patent Application No. 202311138690.2, filed with the China National Intellectual Property Administration on September 1, 2023 and entitled "WINDOW DISPLAY METHOD AND ELECTRONIC DEVICE", both of which are incorporated herein by reference in their entireties.

### TECHNICAL FIELD

Embodiments of this application relate to the field of electronic device technologies, and in particular, to a window display method and an electronic device.

### BACKGROUND

With development of electronic technologies, electronic devices (for example, mobile phones, tablet computers, or smartwatches) have more functions, and may be widely applied to a plurality of scenarios such as home entertainment, and office and learning. In addition, the electronic devices may simultaneously process a plurality of tasks in a multi-task processing manner, to meet requirements of users.

Currently, when performing multi-task processing, an electronic device may display different task interfaces in a multi-window manner. In addition, there is a parent-child level relationship between a part of windows, and a display location and a display size of a child window can be limited only within a range of a parent window. For example, the electronic device may simultaneously display a window a and a window b in a form of a floating window. Then, the electronic device may display a window c in response to an operation of a user on a display interface of the window a, and the window c is a child window of the window a. A size of the window c is less than that of the window a, and the window c can be displayed only in a region in which the window a is located. Therefore, how to adjust a display region of the child window becomes an urgent technical problem to be resolved.

### SUMMARY

This application provides a window display method and an electronic device, so that a display region of a child window can be adjusted.

According to a first aspect, this application provides a window display method. In the method, an electronic device may display a first window in response to an operation of starting a target application, where the first window includes a second window and a third window that are displayed in parallel. Then, the electronic device may receive a first operation performed on the second window, where the first operation is used to trigger displaying of a child window of the second window; and display the child window of the second window in response to the first operation, where the child window of the second window covers a part of a region in which the second window is located and a part of a region in which the third window is located.

Based on the foregoing technical solution, if the displayed child window is used to control the entire window (namely, the first window) of the application, the electronic device displays the displayed child window of the second window between the second window and the third window. This helps a user understand a function permission of the child window (that is, a function in the window is applied to the entire window of the application), and improves use experience of the user. In addition, the child window of the second window is displayed between the second window and the third window, so that the region, of the second window, covered by the child window can be reduced, and use experience of using the second window by the user can be improved.

With reference to the first aspect, in a possible design manner, the electronic device may display the child window, of a first preset size, of the second window, where the first preset size is less than or equal to a size of the first window.

In other words, a size of the child window of the second window is not limited to a size of a parent window (namely, the second window), and may not exceed the size of the first window (namely, a display region of the target application). This enriches display diversity of the child window.

With reference to the first aspect, in another possible design manner, the first preset size is less than or equal to a size of a display.

In other words, the size of the child window of the second window is not limited to a size of a parent window (namely, the second window), and may not exceed the size of the display. This enriches display diversity of the child window.

With reference to the first aspect, in another possible design manner, that the first preset size is less than or equal to the size of the first window includes: a width of the child window of the second window is less than or equal to a width of the first window, and/or a height of the child window of the second window is less than or equal to a height of the first window.

In other words, the width and the height of the child window of the second window are both limited by the first window, so that the child window of the second window can be displayed in a region in which the first window is located. This enriches display diversity of the child window.

With reference to the first aspect, in another possible design manner, that the first preset size is less than or equal to the size of the display includes: a width of the child window of the second window is less than or equal to a width of the display, and a height of the child window of the second window is less than or equal to a height of the display.

In other words, the width and the height of the child window of the second window are both limited by the display, so that the child window of the second window can be displayed in any region on the display. This enriches display diversity of the child window.

With reference to the first aspect, in another possible design manner, the window display method may further include: The electronic device receives a second operation performed on the child window of the second window, where the second operation is used to move the child window of the second window; and then, in response to the second operation, controls the child window of the second window to move, where a movement region of the child window of the second window includes the region in which the first window is located and a region outside the first window.

It may be understood that the electronic device may change a display region of the child window of the second window in response to a movement operation of the user. This enhances operability of the user, thereby improving use experience of the user.

With reference to the first aspect, in another possible design manner, the window display method may further include: The electronic device may receive an enable operation performed on a preset movement button, to enable movement of the child window of the second window, where the preset movement button is used to control whether to allow movement of the child window.

It may be understood that the preset movement button is set, so that the electronic device can enable, based on the operation of the user, a function of moving the child window. In this way, the user can set the function of moving the child window based on an actual requirement, thereby avoiding an accidental touch and improving use experience of the user.

With reference to the first aspect, in another possible design manner, the window display method may further include: The electronic device displays at least one application movement button, where one application movement button corresponds to one application, and the application movement button is used to control whether to allow movement of a child window of the application. Then, the electronic device may receive an enable operation performed on an application movement button of a first application, to enable movement of a child window of the first application, where the first application is any one of an application corresponding to the at least one application movement button.

It may be understood that the electronic device displays the application movement button, so that the user can set movement functions of child windows for different applications. In this way, the user can set, based on an actual requirement, functions of moving child windows of different applications, thereby improving use experience of the user.

With reference to the first aspect, in another possible design manner, the window display method may further include: The electronic device may receive a third operation, where the third operation is used to adjust the size of the child window of the second window. Then, the electronic device adjusts the size of the child window of the second window to a target size in response to the third operation, where the target size is different from the size of the child window of the second window before adjustment.

It may be understood that the electronic device may adjust, by adjusting the size of the child window of the second window, a display region covered by the child window of the second window. In this way, the user can flexibly adjust the size of the child window displayed by the electronic device, to prevent the child window from blocking another window, thereby improving use experience of the user.

With reference to the first aspect, in another possible design manner, the window display method may further include: The electronic device may receive an enable operation performed on a preset adjustment button, to enable adjustment of the size of the child window of the second window, where the preset adjustment button is used to control whether to allow adjustment of the size of the child window.

It may be understood that the preset adjustment button is set, so that the electronic device can enable or disable, based on the operation of the user, a function of adjusting the size of the child window. In this way, the user can set, based on an actual requirement, the function of adjusting the size of the child window, thereby improving use experience of the user.

With reference to the first aspect, in another possible design manner, the window display method may further include: The electronic device may display a second interface, where the second interface includes at least one application adjustment button, one application adjustment button corresponds to one application, and the application adjustment button is used to control whether to allow adjustment of a size of a child window of the application. Then, the electronic device may receive an enable operation performed on an application adjustment button of a second application, to enable adjustment of a size of a child window of the second application, where the second application is any one of an application corresponding to the at least one application adjustment button.

It may be understood that the electronic device displays the application adjustment button, so that the user can set size adjustment functions of child windows for different applications. In this way, the user can set, based on an actual requirement, functions of adjusting sizes of child windows of different applications, thereby improving use experience of the user.

With reference to the first aspect, in another possible design manner, the child window of the second window may include a display switching button, the display switching button is used to trigger the child window of the second window to be displayed in a preset region based on a second preset size, the preset region is an upper-layer region of the region in which the second window is located, and the second preset size is less than a size of the second window; and the window display method may further include: the electronic device may receive an operation performed on the display switching button, adjust the size of the child window of the second window and/or the display region of the child window of the second window, and display the child window, of the second preset size, of the second window in the preset region.

It may be understood that the electronic device may switch a display manner of the child window of the second window by performing the operation on the display switching button. In this way, convenience of switching the display manner of the child window by the user can be improved.

With reference to the first aspect, in another possible design manner, the window display method may further include: The electronic device may execute a first event, where the first event is used to trigger adjustment of a limitation condition on the child window of the second window, and the limitation condition is used to constrain the size of the child window of the second window; and the adjusted limitation condition includes: the size of the child window of the second window is less than or equal to the size of the first window, or the size of the child window of the second window is less than or equal to the size of the display.

It may be understood that, a limitation on the child window of the second window is adjusted, so that the electronic device not only can display the child window of the second window in the region in which the second window is located, but also display the child window of the second window in another region. This enriches display diversity of the child window, thereby improving use experience of the user.

With reference to the first aspect, in another possible design manner, the first event may include at least one of the following: if first information is received, skipping setting the size of the child window of the second window to the first information, where the first information indicates that the size of the child window of the second window matches the second window; if the second window is not a full-screen window, adjusting the limitation condition on the child window of the second window; or if there is second information in window information of the child window of the second window, adjusting the limitation condition on the child window of the second window, where the second information indicates that a window is a child window.

It may be understood that when the limitation condition on the child window is that the child window is related to displaying of the parent window, the electronic device may adjust the limitation condition on the child window. In this way, the electronic device not only can display the child window of the second window in the region in which the second window is located, but also display the child window of the second window in another region. This enriches display diversity of the child window, thereby improving use experience of the user.

With reference to the first aspect, in another possible design manner, the window display method may further include: The electronic device may obtain the window information of the child window of the second window, where the window information includes window type information, a width/height ratio, and a preset display region. Then, if the window information meets a preset condition, the electronic device executes the first event, where the preset condition includes at least one of the following: the window type information is preset type information, the width/height ratio is greater than a preset ratio threshold, the preset display region is not within a range of the region in which the second window is located, and the preset type information indicates that a window type is a child window type.

In other words, when the window type information indicates that the window type is the child window type, the width/height ratio is greater than the preset ratio threshold, and the preset display region is not within the range of the region in which the second window is located, the electronic device may adjust the limitation condition on the child window, so that the child window is not attached to the parent window for displaying, thereby increasing display diversity of the child window.

With reference to the first aspect, in another possible design manner, the window display method may further include: The electronic device obtains window mode information of the first window; and if the window mode information is third information, the electronic device executes the first event, where the third information indicates to perform displaying in an app multiplier mode.

In other words, when the first window is displayed in the app multiplier mode, the electronic device may adjust the limitation condition on the child window. In this way, the child window may be displayed between the second window and the third window. This helps the user understand the function permission of the child window (that is, the function in the window is applied to the entire window of the application), and improves use experience of the user. In addition, the child window of the second window is displayed between the second window and the third window, so that the region, of the second window, covered by the child window can be reduced, and use experience of using the second window by the user can be improved.

With reference to the first aspect, in another possible design manner, the window display method may further include: The electronic device may obtain an application trustlist, where the application trustlist indicates an application that is allowed to display a child window in a target region, and the target region is the part of the region in which the second window is located and the part of the region in which the third window is located. Then, if the target application is in the application trustlist, the electronic device may execute the first event.

It may be understood that, the application trustlist is used, the electronic device may selectively adjust limitation conditions on child windows of a part of applications. In this way, a load of the electronic device can be reduced, and resource consumption can be reduced.

With reference to the first aspect, in another possible design manner, the window display method may further include: The electronic device may obtain fourth information, where the fourth information indicates a triggering manner of the child window of the second window. If the fourth information indicates that the child window of the second window is triggered by the user, the electronic device executes the first event.

It may be understood that, whether the child window is triggered by the user is determined, so that the electronic device adjusts only the limitation condition on the child window triggered by the user. In this way, a limitation condition on a window (for example, an advertisement window) that is not triggered by the user may be avoided from being adjusted, thereby reducing resource consumption of the electronic device.

With reference to the first aspect, in another possible design manner, the window display method may further include: The electronic device may generate a second event by using the second window, where the second event is used to trigger creation of the child window of the second window. Then, the electronic device may obtain window level information by using the second window, where the window level information indicates a level relationship between the second window and the third window; and if the window level information indicates that the second window is at an upper layer of the third window, execute the second event by using the second window.

It may be understood that the electronic device determines the level relationship between the second window and the third window by using the window level information; and if the window level information indicates that the second window is at the upper layer of the third window, it indicates that a level relationship of the child window created in the second window is higher than that of the third window. In this way, the electronic device executes a window creation event by using the second window, so that the child window of the second window can be completely displayed at an upper layer of the second window and the upper layer of the third window, thereby improving use experience of the user.

With reference to the first aspect, in another possible design manner, the window display method may further include: if the window level information indicates that the third window is at an upper layer of the second window, sending the second event to the third window by using the second window, and executing the second event by using the third window.

It may be understood that, if the window level information indicates that the third window is at the upper layer of the second window, it indicates that a level relationship of the child window created in the second window is lower than that of the third window. In this way, the electronic device may send a window creation event to the third window by using the second window, and execute the window creation event by using the third window, so that the child window of the second window can be completely displayed at the upper layer of the second window and the upper layer of the third window, thereby improving use experience of the user.

With reference to the first aspect, in another possible design manner, the second window may include a first drag button, and the third window may include a second drag button; and the window display method may further include: the electronic device may receive, by using the second window, an operation performed on the first drag button, and generate a state change message, where the state change message indicates to adjust a state of a drag button, and the state of the drag button includes at least one of the following: a button size, a button shape, and a button color; in response to the state change message, the electronic device may adjust a state of the first drag button to a target state by using the second window; the electronic device may send the state change message to the third window; and then, in response to the state change message, the electronic device may adjust a state of the second drag button to the target state by using the third window.

It may be understood that, after receiving the operation performed on the first drag button, the electronic device not only can adjust the state of the first drag button, but also send the state change message to the third window, so that the electronic device can adjust the state of the second drag button, thereby ensuring state synchronization between the first drag button and the second drag button, and improving visual experience of the user.

With reference to the first aspect, in another possible design manner, the first window may be a floating window or a full-screen window.

In other words, the target application may be displayed in a floating manner in an app multiplier mode. Alternatively, the target application may be displayed in full screen in the app multiplier mode.

With reference to the first aspect, in another possible design manner, the second window and the third window display different interfaces of the target application.

In other words, two interfaces of a same application may be simultaneously displayed by using the second window and the third window respectively.

According to a second aspect, this application provides an electronic device. The electronic device includes a memory, a display, and one or more processors. The memory and the display are coupled to the processor. The memory is configured to store computer program code, and the computer program code includes computer instructions. When the computer instructions are executed by the one or more processors, the electronic device is enabled to perform the following operations: displaying a first window of a target application in response to an operation of starting the target application, where the first window includes a second window and a third window that are displayed in parallel; receiving a first operation performed on the second window, where the first operation is used to trigger displaying of a child window of the second window; and displaying the child window of the second window in response to the first operation, where the child window of the second window covers a part of a region in which the second window is located and a part of a region in which the third window is located.

With reference to the second aspect, in a possible design manner, when the computer instructions are executed by the one or more processors, the electronic device may be further enabled to perform the following operation: displaying the child window, of a first preset size, of the second window, where the first preset size is less than or equal to a size of the first window, or the first preset size is less than or equal to a size of a display.

With reference to the second aspect, in another possible design manner, that the first preset size is less than or equal to the size of the first window includes: a width of the child window of the second window is less than or equal to a width of the first window, and/or a height of the child window of the second window is less than or equal to a height of the first window.

With reference to the second aspect, in another possible design manner, that the first preset size is less than or equal to the size of the display includes: a width of the child window of the second window is less than or equal to a width of the display, and a height of the child window of the second window is less than or equal to a height of the display.

With reference to the second aspect, in another possible design manner, when the computer instructions are executed by the one or more processors, the electronic device may be further enabled to perform the following operations: receiving a second operation performed on the child window of the second window, where the second operation is used to move the child window of the second window; and in response to the second operation, enabling the child window of the second window to move with the second operation, where a movement region of the child window of the second window includes a region in which the first window is located and a region outside the first window.

With reference to the second aspect, in another possible design manner, when the computer instructions are executed by the one or more processors, the electronic device may be further enabled to perform the following operation: receiving an enable operation performed on a preset movement button, to enable movement of the child window of the second window, where the preset movement button is used to control whether to allow movement of the child window.

With reference to the second aspect, in another possible design manner, when the computer instructions are executed by the one or more processors, the electronic device may be further enabled to perform the following operations: displaying a first interface, where the first interface includes at least one application movement button, one application movement button corresponds to one application, and the application movement button is used to control whether to allow movement of a child window of the application; and receiving an enable operation performed on an application movement button of a first application, to enable movement of a child window of the first application, where the first application is any one of an application corresponding to the at least one application movement button.

With reference to the second aspect, in another possible design manner, when the computer instructions are executed by the one or more processors, the electronic device may be further enabled to perform the following operations: receiving a third operation, where the third operation is used to adjust a size of the child window of the second window; and adjusting the size of the child window of the second window to a target size in response to the third operation, where the target size is different from the size of the child window of the second window before adjustment.

With reference to the second aspect, in another possible design manner, when the computer instructions are executed by the one or more processors, the electronic device may be further enabled to perform the following operation: receiving an enable operation performed on a preset adjustment button, to enable adjustment of the size of the child window of the second window, where the preset adjustment button is used to control whether to allow adjustment of the size of the child window.

With reference to the second aspect, in another possible design manner, when the computer instructions are executed by the one or more processors, the electronic device may be further enabled to perform the following operations: displaying a second interface, where the second interface includes at least one application adjustment button, one application adjustment button corresponds to one application, and the application adjustment button is used to control whether to allow adjustment of a size of a child window of the application; and receiving an enable operation performed on an application adjustment button of a second application, to enable adjustment of a size of a child window of the second application, where the second application is any one of an application corresponding to the at least one application adjustment button.

With reference to the second aspect, in another possible design manner, the child window of the second window includes a display switching button, the display switching button is used to trigger the child window of the second window to be displayed in a preset region based on a second preset size, the preset region is an upper-layer region of the region in which the second window is located, and the second preset size is less than a size of the second window. When the computer instructions are executed by the one or more processors, the electronic device may be further enabled to perform the following operation: receiving an operation performed on the display switching button, adjusting the size of the child window of the second window and/or a display region of the child window of the second window, and displaying the child window, of the second preset size, of the second window in the preset region.

With reference to the second aspect, in another possible design manner, when the computer instructions are executed by the one or more processors, the electronic device may be further enabled to perform the following operations: executing a first event, where the first event is used to trigger adjustment of a limitation condition on the child window of the second window, and the limitation condition is used to constrain the size of the child window of the second window; and the adjusted limitation condition includes: the size of the child window of the second window is less than or equal to the size of the first window, or the size of the child window of the second window is less than or equal to the size of the display.

With reference to the second aspect, in another possible design manner, the first event includes at least one of the following: if first information is received, skipping setting the size of the child window of the second window to the first information, where the first information indicates that the size of the child window of the second window matches the second window; if the second window is not a full-screen window, adjusting the limitation condition on the child window of the second window; or if there is second information in window information of the child window of the second window, adjusting the limitation condition on the child window of the second window, where the second information indicates that a window is a child window.

With reference to the second aspect, in another possible design manner, when the computer instructions are executed by the one or more processors, the electronic device may be further enabled to perform the following operations: obtaining the window information of the child window of the second window, where the window information includes window type information, a width/height ratio, and a preset display region; and if the window information meets a preset condition, executing the first event, where the preset condition includes at least one of the following: the window type information is preset type information, the width/height ratio is greater than a preset ratio threshold, the preset display region is not within a range of the region in which the second window is located, and the preset type information indicates that a window type is a child window type.

With reference to the second aspect, in another possible design manner, when the computer instructions are executed by the one or more processors, the electronic device may be further enabled to perform the following operations: obtaining window mode information of the first window; and if the window mode information is third information, executing the first event, where the third information indicates to perform displaying in an app multiplier mode.

With reference to the second aspect, in another possible design manner, when the computer instructions are executed by the one or more processors, the electronic device may be further enabled to perform the following operations: obtaining an application trustlist, where the application trustlist indicates an application that is allowed to display a child window in a target region, and the target region is the part of the region in which the second window is located and the part of the region in which the third window is located; and if the target application is in the application trustlist, executing the first event.

With reference to the second aspect, in another possible design manner, when the computer instructions are executed by the one or more processors, the electronic device may be further enabled to perform the following operations: obtaining fourth information, where the fourth information indicates a triggering manner of the child window of the second window; and if the fourth information indicates that the child window of the second window is triggered by a user, executing the first event.

With reference to the second aspect, in another possible design manner, when the computer instructions are executed by the one or more processors, the electronic device may be further enabled to perform the following operations: generating a second event by using the second window, where the second event is used to trigger creation of the child window of the second window; obtaining window level information by using the second window, where the window level information indicates a level relationship between the second window and the third window; and if the window level information indicates that the second window is at an upper layer of the third window, executing the second event by using the second window.

With reference to the second aspect, in another possible design manner, when the computer instructions are executed by the one or more processors, the electronic device may be further enabled to perform the following operation: if the window level information indicates that the third window is at an upper layer of the second window, sending the second event to the third window by using the second window, and executing the second event by using the third window.

With reference to the second aspect, in another possible design manner, the second window includes a first drag button, and the third window includes a second drag button. When the computer instructions are executed by the one or more processors, the electronic device may be further enabled to perform the following operation: receiving, by using the second window, an operation performed on the first drag button, and generating a state change message, where the state change message indicates to adjust a state of a drag button, and the state of the drag button includes at least one of the following: a button size, a button shape, and a button color; in response to the state change message, adjusting a state of the first drag button to a target state by using the second window; sending the state change message to the third window; and in response to the state change message, adjusting a state of the second drag button to the target state by using the third window.

With reference to the second aspect, in another possible design manner, the first window is a floating window or a full-screen window.

With reference to the second aspect, in another possible design manner, the second window and the third window display different interfaces of the target application.

According to a third aspect, this application provides a chip system, and the chip system is applied to an electronic device. The chip system includes one or more interface circuits and one or more processors. The interface circuit and the processor are connected through a line. The interface circuit is configured to: receive a signal from a memory of the electronic device, and send the signal to the processor. The signal includes computer instructions stored in the memory. When the processor executes the computer instructions, the electronic device performs the method according to any one of the first aspect and the possible design manners of the first aspect.

According to a fourth aspect, this application provides a computer-readable storage medium. The computer-readable storage medium includes computer instructions; and when the computer instructions are run on an electronic device, the electronic device is enabled to perform the method according to any one of the first aspect and the possible design manners of the first aspect.

According to a fifth aspect, this application provides a computer program product. When the computer program product runs on a computer, the computer is enabled to perform the method according to any one of the first aspect and the possible design manners of the first aspect.

It may be understood, for beneficial effect that can be achieved by the electronic device according to any one of the second aspect and the possible design manners of the second aspect, the chip system according to the third aspect, the computer-readable storage medium according to the fourth aspect, and the computer program product according to the fifth aspect, refer to the beneficial effect according to any one of the first aspect and the possible design manners of the first aspect. Details are not described herein again.

### BRIEF DESCRIPTION OF DRAWINGS

FIG. 1 is a diagram of an example of displaying a child window according to an embodiment of this application;
FIG. 2A and FIG. 2B are a diagram of another example of displaying a child window according to an embodiment of this application;
FIG. 3 is a diagram of a hardware structure of an electronic device according to an embodiment of this application;
FIG. 4 is a diagram of a software structure of an electronic device according to an embodiment of this application;
FIG. 5A is a diagram of another example of displaying a child window according to an embodiment of this application;
FIG. 5B is a diagram of another example of displaying a child window according to an embodiment of this application;
FIG. 6A is a diagram of another example of displaying a child window according to an embodiment of this application;
FIG. 6B is a diagram of another example of displaying a child window according to an embodiment of this application;
FIG. 7 is a diagram of another example of displaying a child window according to an embodiment of this application;
FIG. 8A and FIG. 8B are a diagram of an example of moving a child window according to an embodiment of this application;
FIG. 9A is a diagram of an example of a child window setting interface according to an embodiment of this application;
FIG. 9B-1 and FIG. 9B-2 are a diagram of another example of a child window setting interface according to an embodiment of this application;

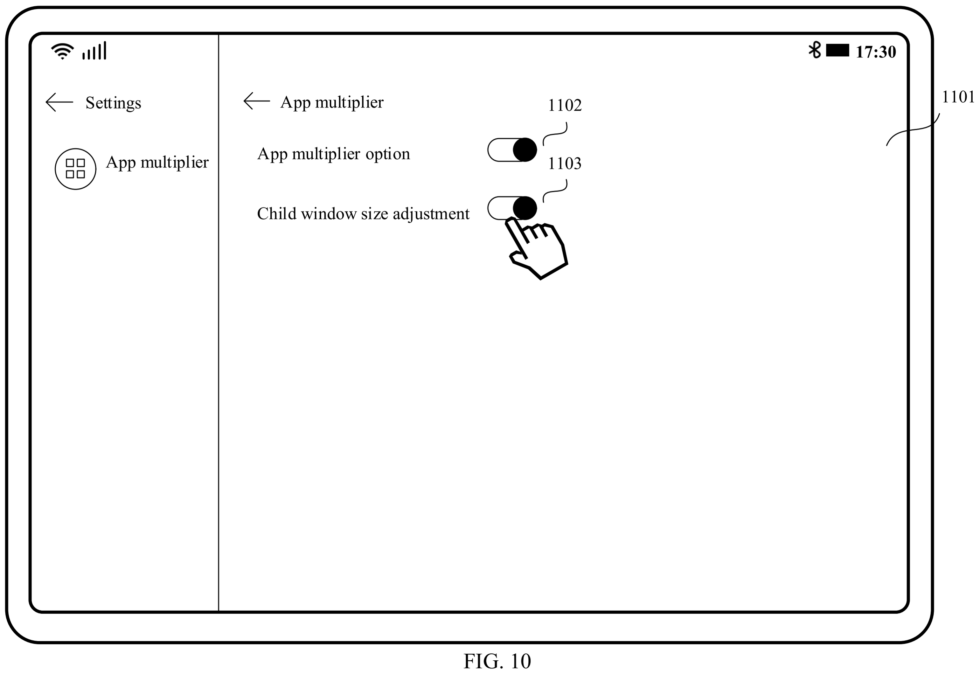

FIG. 10 is a diagram of another example of a child window setting interface according to an embodiment of this application;

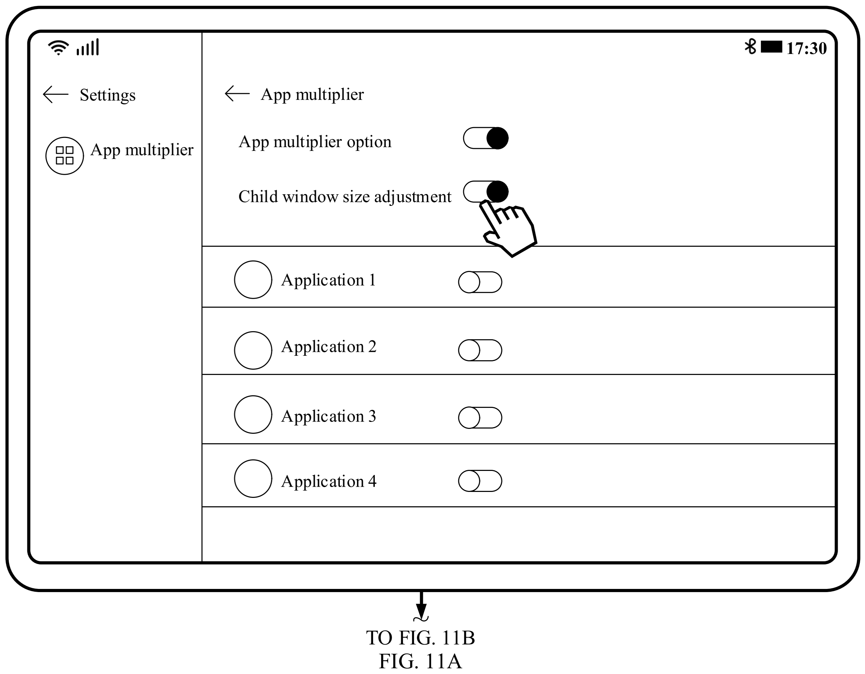

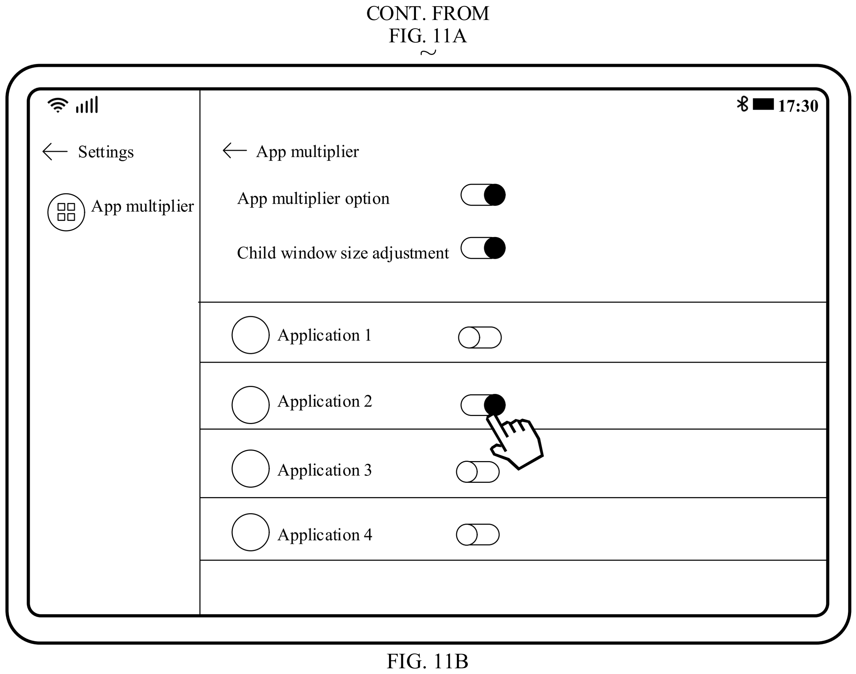

FIG. 11A and FIG. 11B are a diagram of another example of a child window setting interface according to an embodiment of this application;

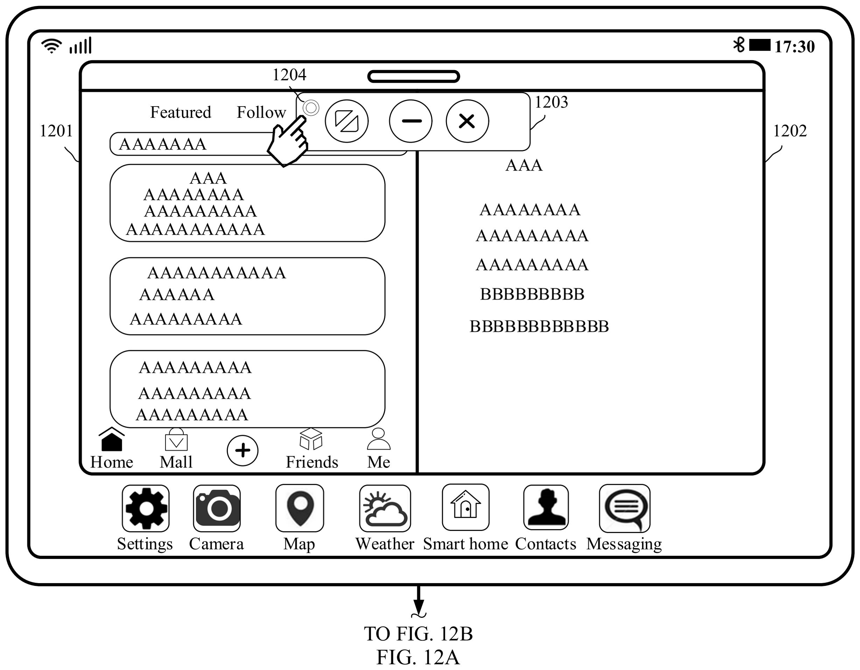

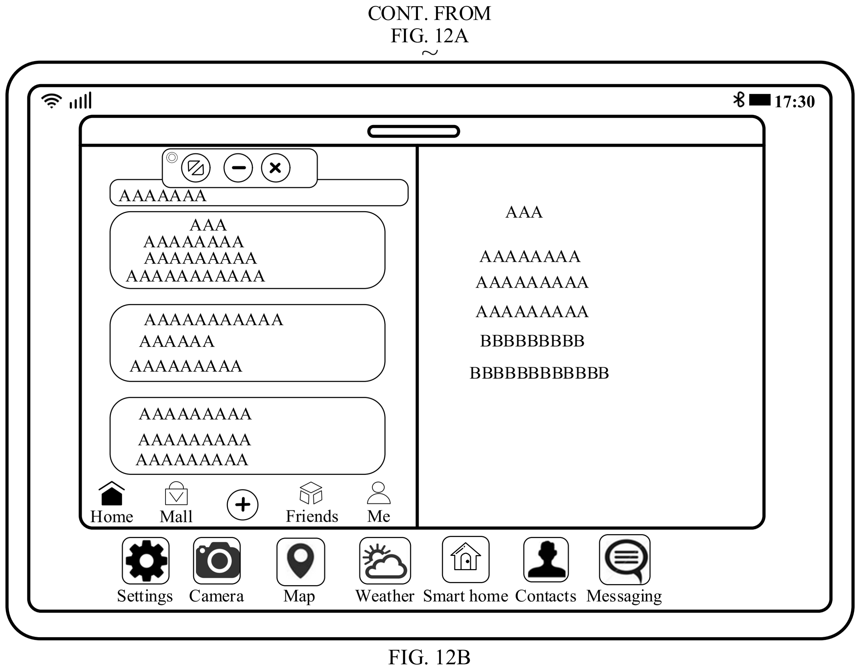

FIG. 12A and FIG. 12B are a diagram of another example of displaying a child window according to an embodiment of this application;

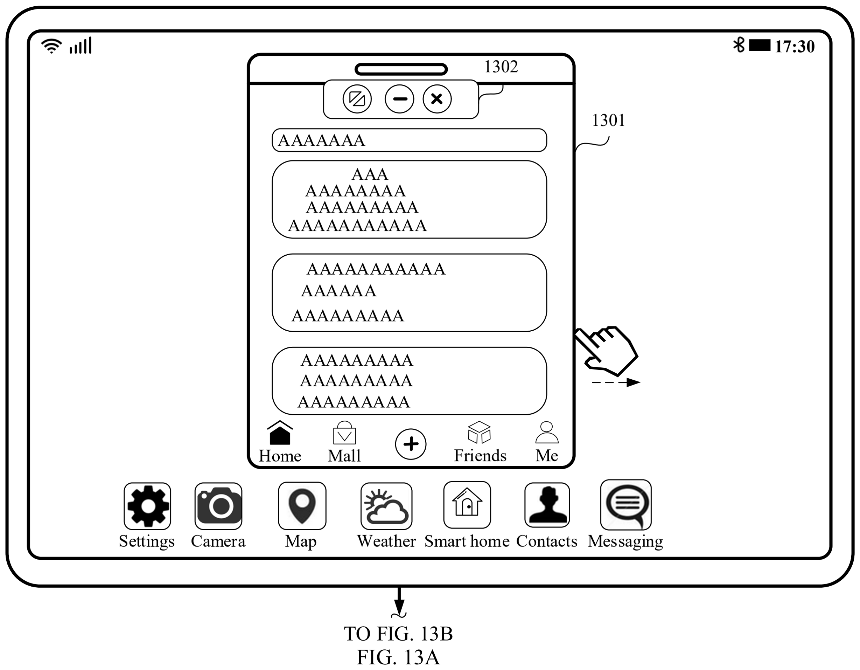

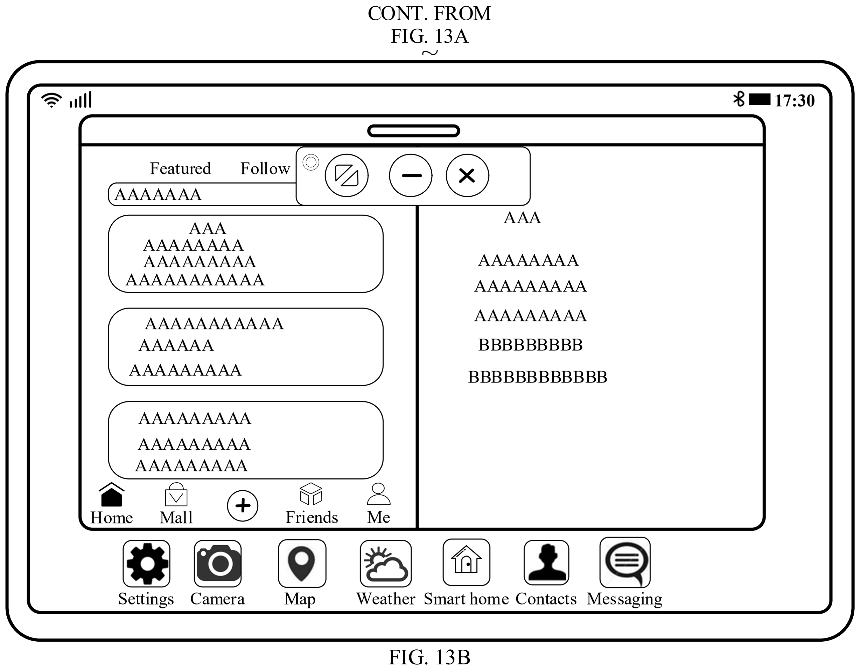

FIG. 13A and FIG. 13B are a diagram of another example of displaying a child window according to an embodiment of this application;

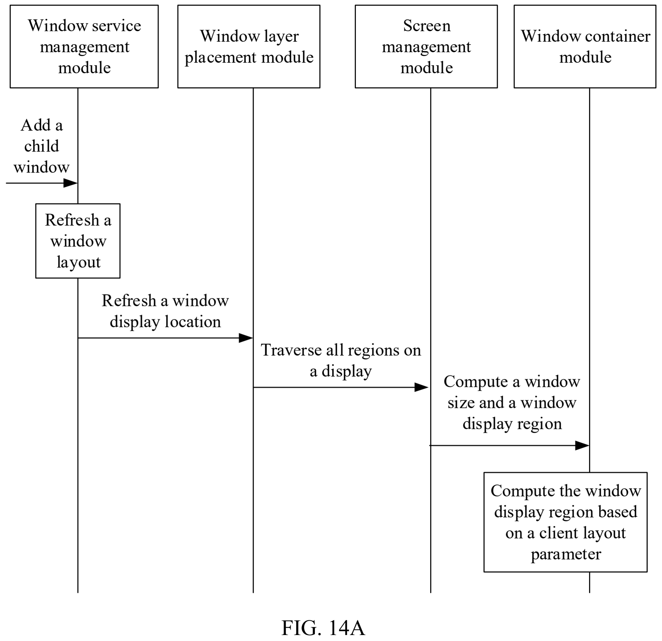

FIG. 14A is a schematic flowchart of a child window layout method according to an embodiment of this application;

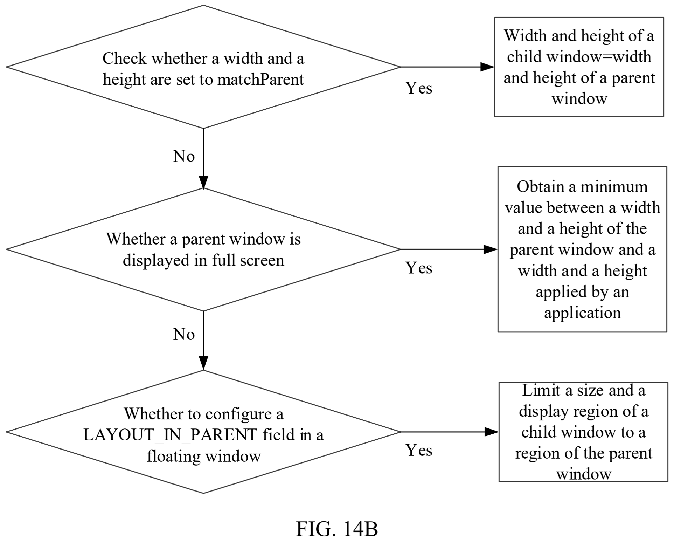

FIG. 14B is a schematic flowchart of a child window limitation method according to an embodiment of this application;

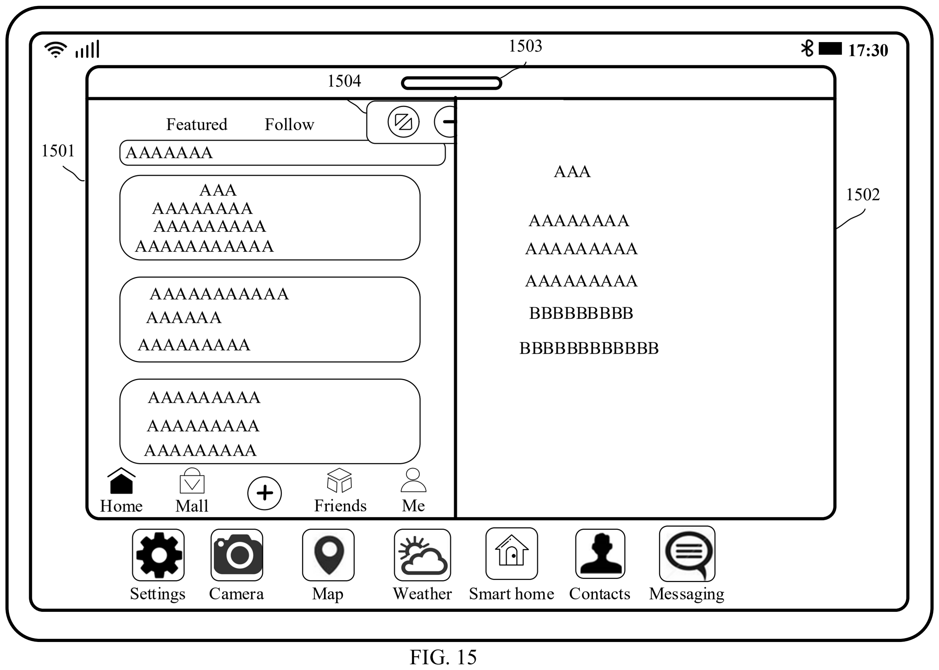

FIG. 15 is a diagram of another example of displaying a child window according to an embodiment of this application;

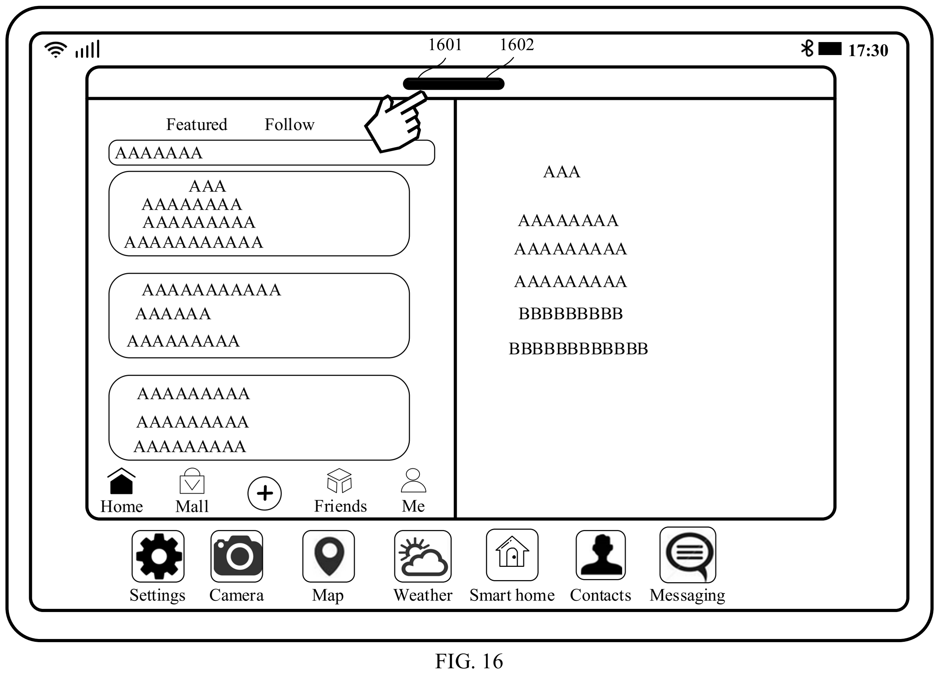

FIG. 16 is a diagram of another example of displaying a child window according to an embodiment of this application;

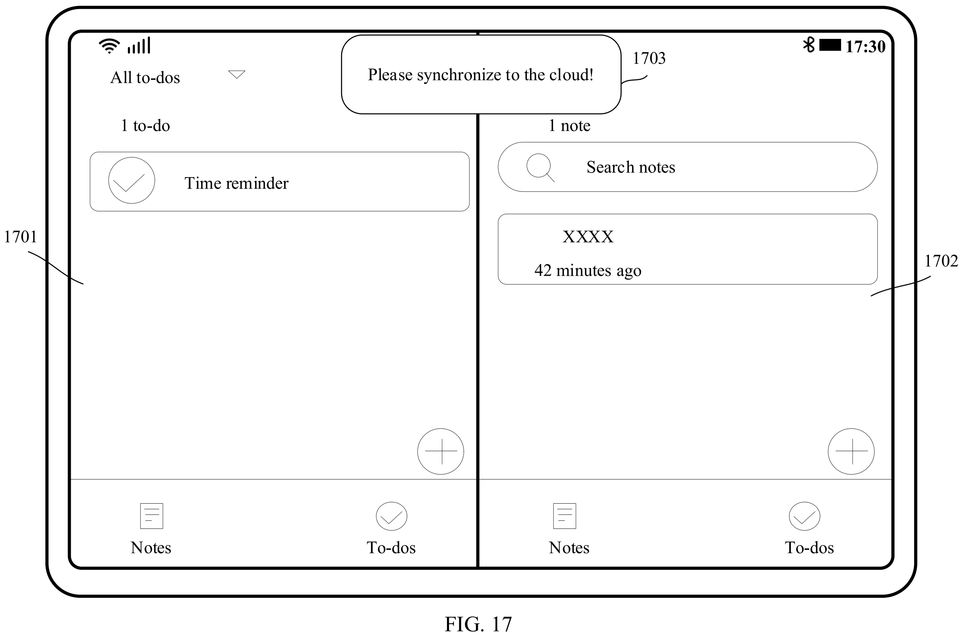

FIG. 17 is a diagram of another example of displaying a child window according to an embodiment of this application; and

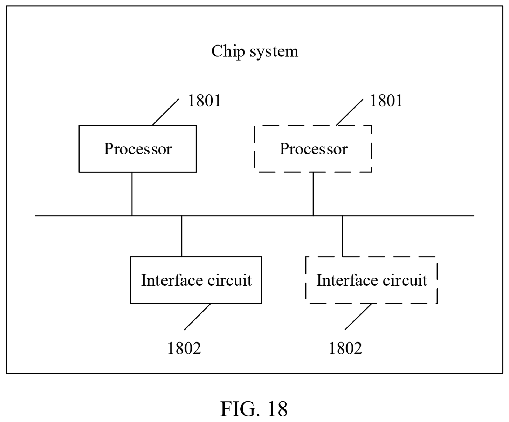

FIG. 18 is a diagram of structural composition of a chip system according to an embodiment of this application.

### DESCRIPTION OF EMBODIMENTS

The following clearly and completely describes technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In addition, the character "/" in this application usually indicates an "or" relationship between associated objects. For example, A/B may be understood as "A or B".

The terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In descriptions of embodiments, unless otherwise specified, "a plurality of" means two or more.

In addition, the terms "including", "having", or any other variant thereof in descriptions of this application are intended to cover non-exclusive inclusion. For example, a process, a method, a system, a product, or a device that includes a series of steps or modules is not limited to the listed steps or modules, but optionally further includes another unlisted step or module, or optionally further includes another inherent step or module of the process, the method, the product, or the device.

In addition, in embodiments of this application, the term "example" or "for example" represents giving an example, an illustration, or a description. Any embodiment or design scheme described as an "example" or "for example" in this application should not be explained as being more preferred or having more advantages than another embodiment or design scheme. To be precise, use of the term "example" or "for example" is intended to present a concept in a specific manner.

With development of electronic technologies, electronic devices (for example, mobile phones, tablet computers, or smartwatches) have more functions, and may be widely applied to a plurality of scenarios such as home entertainment, and office and learning. In addition, the electronic devices may simultaneously process a plurality of tasks in a multi-task processing manner, to meet requirements of users.

When performing multi-task processing, an electronic device may display different task interfaces in a multi-window manner. In addition, there is a parent-child level relationship between a part of windows, namely, a parent window and a child window. The electronic device may pop up a new window in response to an operation performed by a user on the parent window, and the new pop-up window is the child window. An interface displayed in the child window and an application interface displayed in the parent window may be application interfaces of a same application, or the interface displayed in the child window may be an interface associated with the parent window, for example, an interface for setting an attribute of the parent window. Currently, when popping up the child window, the electronic device sets that a display location and a display size of the child window can be limited only within a range of the parent window.

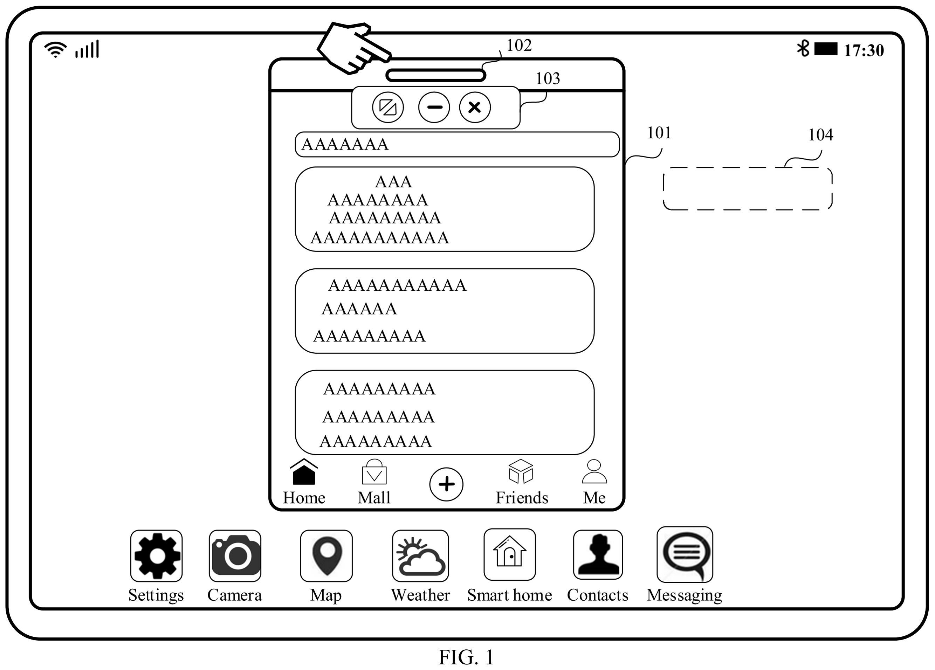

For example, as shown in FIG. 1, the electronic device may display a floating window 101, the floating window 101 displays an application interface of an application a, and the floating window 101 includes a drag button 102. In response to an operation (for example, a tap operation or a touch and hold operation) on the drag button 102, the electronic device may display a floating window 103 (namely, a child window of the floating window 101) at an upper layer of a region in which the floating window 101 is located. For example, the floating window 103 may be displayed at a top of the floating window 101. Optionally, the floating window 103 may include a window setting interface. The window setting interface may include a maximize button, a minimize button, and a close button. The maximize button is used to maximize the floating window 101 (for example, adjust the floating window 101 to be displayed in full screen), the minimize button is used to minimize the floating window 101 (for example, hide the floating window 101), and the close button is used to close the floating window 101. In addition, the floating window 103 cannot be displayed in any region outside the region in which the floating window 101 is located on a display. For example, the floating window 102 cannot be displayed in a region 104.

In addition, to improve use experience of the user when the electronic device performs multi-task parallel processing, the electronic device may display two interfaces of a same application in an app multiplier mode. In other words, when the electronic device is in the app multiplier mode, one floating window may be split into two windows, and two pages of a same application are simultaneously displayed. However, after the user performs an operation on one of the two windows (for example, a window a), a child window, of the window a, popped up by the electronic device can be displayed only in the window a, and cannot be displayed in another region on the display.

For example, a size of the floating window can be freely adjusted. However, when the size of the floating window is reduced to a specific proportion, the maximize button, the minimize button, and the close button on left and right sides of a title bar of the floating window are not displayed. Then, after receiving an operation of tapping the drag button, the electronic device may display the child window in which the maximize button, the minimize button, and the close button are displayed.

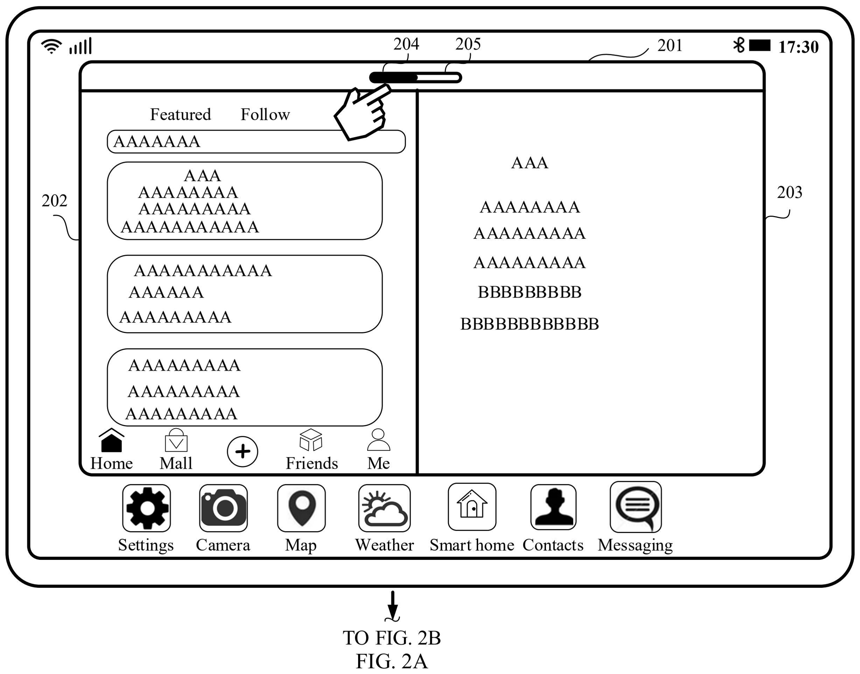

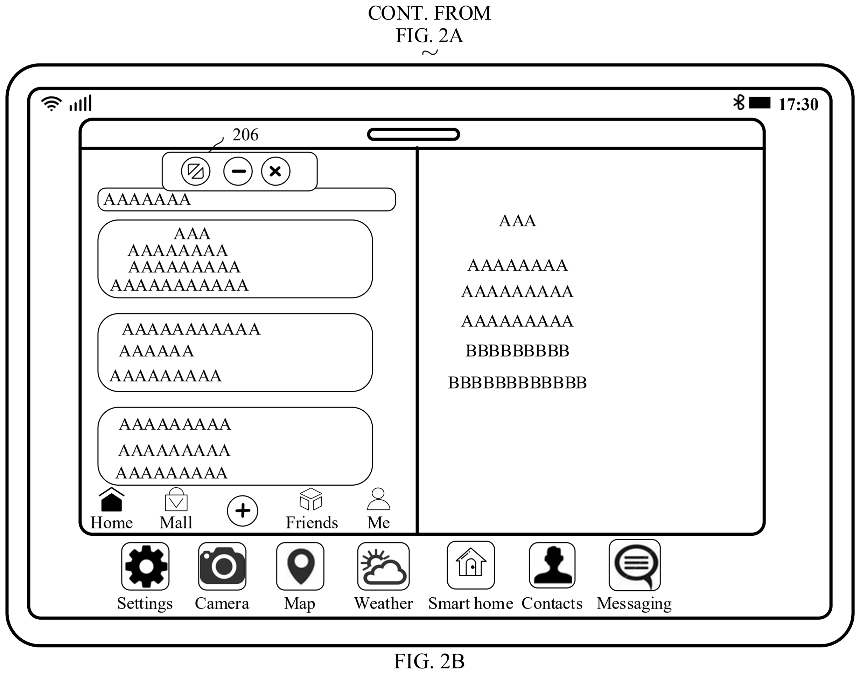

For example, as shown in FIG. 2A and FIG. 2B, the electronic device may display a floating window 201, the floating window 201 may include a floating window 202 and a floating window 203, and both the floating window 202 and the floating window 203 display an application interface of an application a. The floating window 202 includes a drag button 204, and the floating window 203 includes a drag button 205. Then, in response to an operation (for example, a tap operation or a touch and hold operation) on the drag button 204, the electronic device may display a floating window 206 (namely, a child window of the floating window 202) at an upper layer of a region in which the floating window 202 is located. For example, the floating window 206 may be displayed at a top of the floating window 202. Optionally, the floating window 206 may include a maximize button, a minimize button, and a close button. The maximize button is used to maximize the floating window 201 (for example, adjust the floating window 201 to be displayed in full screen), and the minimize button is used to minimize the floating window 201 (for example, hide the floating window 101). In addition, the floating window 206 cannot be displayed in any region outside the region in which the floating window 202 is located on the display. For example, the floating window 206 cannot be displayed in a region in which the floating window 203 is located.

With reference to FIG. 2A and FIG. 2B, it may be learned that a control button in the floating window 206 is a button used to control the floating window 201, but can be displayed only in the region in which the floating window 202 is located. In this way, the user may mistakenly consider that the control button in the floating window 206 is a button used to control the floating window 202, which causes confusion to the user during operation and affects use experience of the user. Therefore, how to adjust a display manner of the child window becomes an urgent technical problem to be resolved.

Therefore, embodiments of this application provide a window display method. In the method, an electronic device may display a parent window. Then, the electronic device may receive an operation performed on the parent window, to trigger displaying of a child window corresponding to the parent window. In response to the operation performed on the parent window, the electronic device may display the child window in the parent window, or the electronic device may display the child window in a region outside the parent window on a display. In this way, the electronic device not only can display the child window in the parent window, but also display the child window in the region outside the parent window. In this way, window display flexibility can be improved, and use experience of a user can be improved.

In embodiments of this application, the window may display an application interface of an application, or the window may display a system interface. This is not limited in embodiments of this application. The application in embodiments of this application may be an embedded application (namely, a system application of the electronic device) installed in the electronic device or a downloadable application. The embedded application is an application provided as a part of the electronic device (for example, a mobile phone). The downloadable application is an application that may provide an internet protocol multimedia subsystem (Internet Protocol Multimedia Subsystem, IMS) connection of the downloadable application. The downloadable application may be an application pre-installed in a terminal, or may be a third-party application that is downloaded by the user and that is installed in the terminal.

For example, the foregoing application may be an embedded application (namely, a system application of the terminal) installed in the terminal. For example, the foregoing application may be a clock, a calendar, a calculator, or the like.

For another example, the foregoing plurality of applications may be downloadable applications. For example, the foregoing application may be a social application, a shopping application, a short video application, or the like.

For example, the electronic device in embodiments of this application may be a device such as a tablet computer, a mobile phone, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, or a vehicle-mounted device. A specific form of the electronic device is not specifically limited in embodiments of this application.

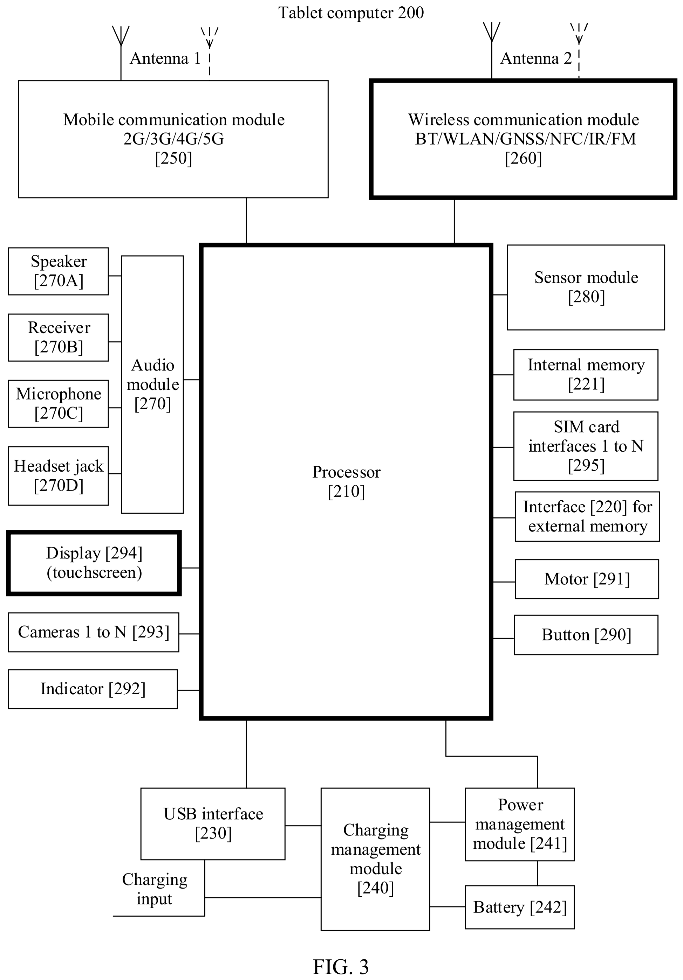

The window display method provided in this application may be performed by a window display apparatus, and the execution apparatus may be the electronic device shown in FIG. 3. In addition, the execution apparatus may alternatively be a central processing unit (Central Processing Unit, CPU) of the electronic device, or a window display control module in the electronic device. In embodiments of this application, an example in which the electronic device performs the window display method is used to describe the window display method provided in embodiments of this application.

Refer to FIG. 3. An example in which the electronic device is a tablet computer 200 shown in FIG. 3 is used herein in this application to describe the electronic device provided in this application. The tablet computer 200 shown in FIG. 3 is merely an example of the electronic device, and the tablet computer 200 may have more or fewer components than those shown in the figure, may combine two or more components, or may have different component configurations. Various components shown in FIG. 3 may be implemented in hardware including one or more signal processing circuits and/or application-specific integrated circuits, software, or a combination of hardware and software.

As shown in FIG. 3, the tablet computer 200 may include a processor 210, an interface 220 for external memory, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identification module, SIM) card interface 295, and the like.

The sensor module 280 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the tablet computer 200. The controller may generate an operation control signal based on an instruction operation code and a time sequence signal, to complete control of instruction fetching and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor may directly invoke the instructions or the data from the memory. This avoids repeated access, reduces waiting time of the processor 210, and therefore improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in embodiments is merely an example for description, and constitutes no limitation on the structure of the tablet computer 200. In some other embodiments, the tablet computer 200 may alternatively use an interface connection manner different from that in the foregoing embodiments, or use a combination of a plurality of interface connection manners.

The charging management module 240 is configured to receive a charging input from a charger. The charger may be a wireless charger or a wired charger. When charging the battery 242, the charging management module 240 may further supply power to the electronic device through the power management module 241.

The power management module 241 is configured to be connected to the battery 242, the charging management module 240, and the processor 210. The power management module 241 receives an input from the battery 242 and/or an input from the charging management module 240, to supply power to the processor 210, the internal memory 221, an external memory, the display 294, the camera 293, the wireless communication module 260, and the like. In some embodiments, the power management module 241 and the charging management module 240 may alternatively be disposed in a same component.

A wireless communication function of the tablet computer 200 may be implemented through the antenna 1, the antenna 2, the mobile communication module 250, the wireless communication module 260, the modem processor, the baseband processor, and the like. In some embodiments, the antenna 1 of the tablet computer 200 is coupled to the mobile communication module 250, and the antenna 2 is coupled to the wireless communication module 260, so that the tablet computer 200 can communicate with a network and another device by using a wireless communication technology. For example, in embodiments of this application, the tablet computer 200 may send the foregoing target data to another device by using a wireless communication technology.

The antenna 1 and the antenna 2 are configured to transmit and receive an electromagnetic wave signal. Each antenna in the tablet computer 200 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 250 may provide a wireless communication solution that includes 2G/3G/4G/5G or the like and that is applied to the tablet computer 200. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit a processed electromagnetic wave to the modem processor for demodulation.

The mobile communication module 250 may further amplify a signal modulated by the modem processor, and convert an amplified signal into an electromagnetic wave for radiation through the antenna 1. In some embodiments, at least some functional modules in the mobile communication module 250 may be disposed in the processor 210. In some embodiments, at least some functional modules in the mobile communication module 250 may be disposed in a same component as at least some modules in the processor 210.

The wireless communication module 260 may provide a wireless communication solution that is applied to the tablet computer 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. For example, in embodiments of this application, the tablet computer 200 may access the Wi-Fi network through the wireless communication module 260.

The wireless communication module 260 may be one or more components integrating at least one communication processing module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

The tablet computer 200 implements a display function through the GPU, the display 294, the application processor, and the like. The GPU is a microprocessor for image processing, and is connected to the display 294 and the application processor. The GPU is configured to: perform mathematical and geometric computing, and render an image. The processor 210 may include one or more GPUs that execute program instructions to generate or change displayed information.

The display 294 is configured to display an image, a video, or the like. The display 294 includes a display panel. For example, in embodiments of this application, the display 294 may be configured to display an application interface of the foregoing application, for example, a device sharing interface, a device search interface, and a two-dimensional code scanning interface.

The tablet computer 200 may implement a photographing function through the ISP, the camera 293, the video codec, the GPU, the display 294, the application processor, and the like. The ISP is configured to process data fed back by the camera 293. The camera 293 is configured to capture a static image or a video. In some embodiments, the tablet computer 200 may include one or N cameras 293, where N is a positive integer greater than 1.

The interface 220 for external memory may be configured to be connected to an external storage card, for example, a micro SD card, to extend a storage capability of the tablet computer 200. The external storage card communicates with the processor 210 through the interface 220 for external memory, to implement a data storage function. For example, files such as music and videos are stored in the external storage card.

The internal memory 221 may be configured to store computer-executable program code, and the executable program code includes instructions. The processor 210 runs the instructions stored in the internal memory 221, to perform various functional applications and data processing of the tablet computer 200. For example, in embodiments of this application, the processor 210 may execute the instructions stored in the internal memory 221, and the internal memory 221 may include a program storage area and a data storage area.

The program storage area may store an operating system, an application required by at least one function (for example, a sound playing function or an image playing function), and the like. The data storage area may store data (for example, audio data or a phone book) created during use of the tablet computer 200, and the like. In addition, the internal memory 221 may include a high-speed random access memory, or may include a non-volatile memory, for example, at least one magnetic disk storage device, a flash memory, or a universal flash storage (universal flash storage, UFS).

The tablet computer 200 may implement an audio function such as music playing or recording through the audio module 270, the speaker 270A, the receiver 270B, the microphone 270C, the headset jack 270D, the application processor, and the like.

The button 290 includes a power button, a volume button, and the like. The button 290 may be a mechanical button, or may be a touch button. The motor 291 may generate a vibration prompt. The motor 291 may be configured to provide an incoming call vibration prompt and a touch vibration feedback. The indicator 292 may be an indicator light, and may be configured to indicate a charging status and a battery change, or may be configured to indicate a message, a missed call, a notification, and the like. The SIM card interface 295 is configured to be connected to a SIM card. The SIM card may be inserted into the SIM card interface 295 or removed from the SIM card interface 295, to implement contact with or separation from the tablet computer 200. The tablet computer 200 may support one or N SIM card interfaces, where N is a positive integer greater than 1. The SIM card interface 295 may support a nano-SIM card, a micro-SIM card, a SIM card, and the like.

Although not shown in FIG. 3, the tablet computer 200 may further include a flash, a micro projection apparatus, a near field communication (Near Field Communication, NFC) apparatus, and the like. Details are not described herein.

It may be understood that the structure shown in embodiments does not constitute a specific limitation on the tablet computer 200. In some other embodiments, the tablet computer 200 may include more or fewer components than those shown in the figure, or combine some components, or split some components, or have different component arrangements. The components shown in the figure may be implemented by hardware, software, or a combination of software and hardware.

After the hardware structure of the electronic device is described, in this application, an example in which the electronic device is the tablet computer 200 is used herein to describe a system architecture of the electronic device provided in this application. The system architecture of the tablet computer 200 may use a layered architecture, an event-driven architecture, a microkernel architecture, a microservice architecture, or a cloud architecture. The operating system of the tablet computer 200 may be an Android TM operating system, a HarmonyOS TM operating system, or an iOS TM operating system. This is not limited in embodiments of this application. The following describes a software structure of the tablet computer 200 by using an Android^{®} system of a layered architecture as an example in embodiments of the present invention.

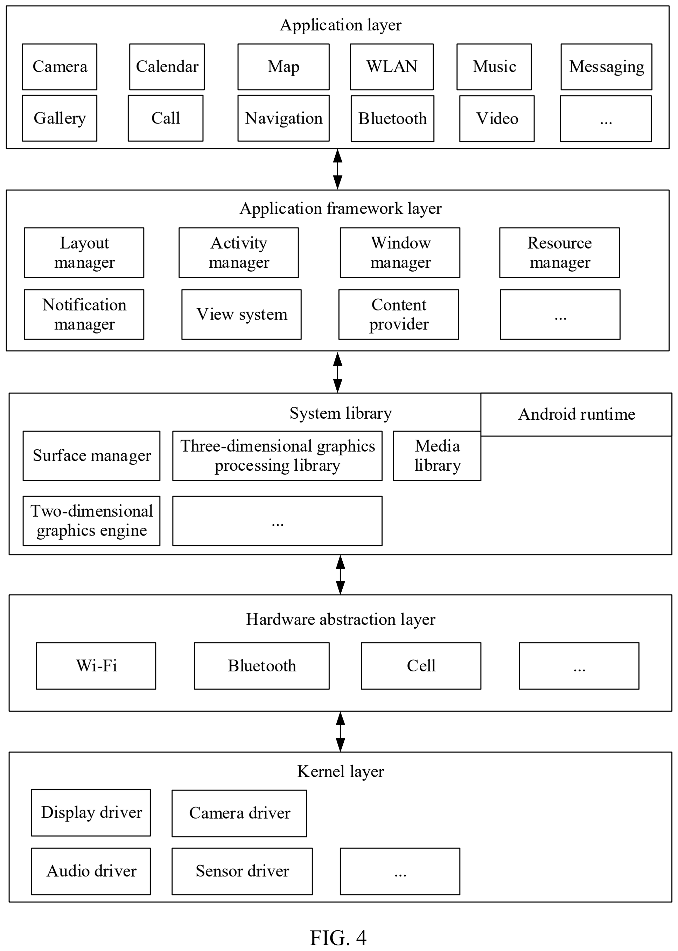

FIG. 4 is a block diagram of the software structure of the tablet computer 200 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android Runtime) and a system library, a hardware abstraction layer, and a kernel layer from top to bottom.

The application layer may include a series of application packages. As shown in FIG. 4, the application packages may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions. As shown in FIG. 4, the application framework layer may include a layout (layout) manager, an activity (activity) manager, a window manager, a view system, a resource manager, a notification manager, a content provider, and the like.

The layout manager is configured to manage a location and a size of a component (Component) in a container (Container). The graphical user interface (Graphical User Interface, GUI) needs to adapt to different window sizes and screen resolutions. When the window size changes, the layout manager may adjust the location and the size of the component.

The activity manager is configured to create a window (window), and the activity manager is further configured to: distribute an operation event input by a user, and respond to an operation of the user. For example, the activity manager receives an operation of creating a window by the user, and may create a new window.

The window manager is configured to manage a window program. The window manager may adjust a window layout. For example, the window manager may determine a size and a location of a window. The window manager may further obtain a size of a display, determine whether there is a status bar, perform screen locking, take a screenshot, and the like.

The window manager may include an application window and a child window. The application window corresponds to an application window of a specific application, for example, an application window of a specific reading application, used to display content in the reading application; for another example, an application window of a shopping application, used to display content in the shopping application; and for another example, an application window of a memo application, used to display content in the memo application. The child window is attached to a parent window. To be specific, the child window cannot exist independently and depends on an application. For example, the child window may be an application input method window, an application prompt box window, a shopping cart window, and the like.

In a possible design, a window attribute is a child window when the window attribute is between WindowManager.LayoutParams.FIRST_SUB_WINDOW (1000) and WindowManager.LayoutParams.LAST_APPLICATION_WINDOW (99).

The content provider is configured to: store and obtain data, to enable the data to be accessible to an application. The data may include a video, an image, audio, calls that are made and answered, a browsing history and bookmarks, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or the indicator blinks.

The Android runtime includes a core library and a virtual machine. The Android runtime is responsible for scheduling and management of the Android system. The core library includes two parts: a performance function that needs to be invoked in Java language and a core library of Android. The application layer and the application framework layer run in the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The hardware abstraction layer is configured to: encapsulate a kernel layer driver, and provide an invocation interface for an upper layer.

The kernel layer is a layer between hardware and software. The kernel layer includes at least a display driver, a camera driver, an audio driver, and a sensor driver.

The following describes an example of a working procedure of software and hardware of the tablet computer 200 with reference to a scenario in which an application window is displayed.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a touch tap operation, and a control corresponding to the tap operation is a control of a shopping application icon. A shopping application invokes an interface of the application framework layer to start the shopping application, and then invokes the kernel layer to start the display driver, to display an application window of the shopping application through the display.

All methods in the following embodiments may be implemented in an electronic device having the foregoing hardware structure and system architecture. In the following embodiments, an example in which the electronic device is a tablet computer 200 is used to describe the method in embodiments of this application.

In some embodiments, the electronic device may display a child window in an app multiplier mode. The app multiplier mode is different from a conventional split-screen mode. In the conventional split-screen mode, two different applications (specifically, application interfaces) are displayed by using two split-screen regions of a display. The app multiplier mode may be understood as a split-screen display mode for a same application, to be specific, two different interfaces of one application may be displayed by using two split-screen regions (or two windows in one floating window) of the display. For example, as shown in FIG. 2A and FIG. 2B, the floating window 202 is used to display an application home page, the application home page may include a plurality of search options, one search option corresponds to one piece of page content, and the floating window 203 is used to display page content corresponding to the search option.

It should be noted that before the electronic device displays the application interface in the app multiplier mode, the electronic device may enable the app multiplier mode in response to an operation of a user. A manner of enabling the app multiplier mode is not limited in embodiments of this application. For example, the user may open a setting interface in the app multiplier mode in a system setting interface, and select an option of enabling the app multiplier mode. For another example, the user may trigger, by using a voice operation, enabling of the app multiplier mode. For another example, the user may adjust a width/height ratio of a window (for example, the width/height ratio of the window is greater than a width/height ratio threshold, that is, the window is displayed in a horizontal display manner), to trigger enabling of the app multiplier mode.

In embodiments of this application, after displaying two application windows of one application in the app multiplier mode, the electronic device may display a child window of the application window in response to an operation of the user. The electronic device may display a first window in response to an operation of starting a target application, where the first window includes a second window and a third window that are displayed in parallel. Both the second window and the third window are used to display application interfaces of a same application. Then, the electronic device may receive a first operation performed on the second window, where the first operation is used to trigger displaying of a child window of the second window; and the electronic device may display the child window of the second window in response to the first operation.

In some examples, the second window and the third window are windows of a same application (for example, the target application), and there is no parent-child relationship between the second window and the third window.

In some other examples, there is a parent-child relationship between the second window and the third window. The third window may be a child window of the second window. Alternatively, the second window may be a child window of the third window.

In embodiments of this application, the electronic device may display the child window of the second window in a target region.

In a possible design, the target region is a part of a region in which the second window is located and/or a part of a region in which the third window is located.

In other words, the target region is any region in a region in which the first window is located. When the target region is the region in which the first window is located, the child window of the second window has the following three display manners (a manner 1 to a manner 3). In the manner 1, the electronic device may display the child window of the second window in the region in which the second window is located. In the manner 2, the electronic device may display the child window of the second window in the region in which the third window is located. In the manner 3, the electronic device may display the child window of the second window between the second window and the third window.

In some examples, the first window may be a floating window. Alternatively, the first window may be a full-screen window. The following describes this application by using an example in which the first window is a floating window.

In the manner 1, in response to the first operation, the electronic device may display the child window of the second window in the region in which the second window is located, that is, the child window of the second window may cover the part of the region in which the second window is located (as shown in FIG. 2A and FIG. 2B).

In some examples, the electronic device may display the child window of the second window in any region in the region in which the second window is located. For example, with reference to FIG. 2A and FIG. 2B, the electronic device may display a floating window 204 in a top region of the floating window 202; or the electronic device may display a floating window 204 in a middle region of the floating window 202; or the electronic device may display a floating window 204 in a bottom region of the floating window 202.

In the manner 2, in response to the first operation, the electronic device may display the child window of the second window in the region in which the third window is located, that is, the child window of the second window may cover the part of the region in which the third window is located.

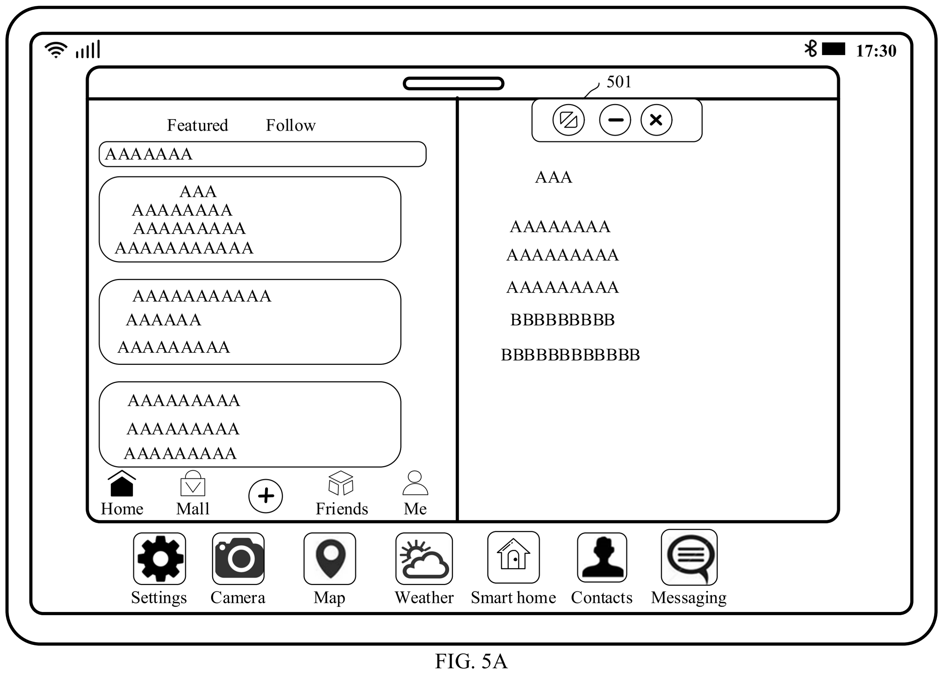

For example, with reference to FIG. 2A and FIG. 2B, as shown in FIG. 5A, after the electronic device receives an operation of tapping the drag button 204 by the user, the electronic device may display a floating window 501 at an upper layer of the floating window 203.

In some examples, the electronic device may display the child window of the second window in any region in the region in which the third window is located. For example, with reference to FIG. 5A, the electronic device may display the floating window 501 in a top region of the floating window 203; or the electronic device may display the floating window 501 in a middle region of the floating window 203; or the electronic device may display the floating window 501 in a bottom region of the floating window 203.

It may be understood that if the user is using the second window, the electronic device displays, in the third window, the displayed child window of the second window. In this way, the electronic device may completely display the second window and the child window of the second window, to reduce impact on use of the second window by the user.

In the manner 3, in response to the first operation, the electronic device may display the child window of the second window between the second window and the third window, that is, the child window of the second window may cover both the second window and the third window (that is, cover the part of the region of the second window and the part of the region of the third window).

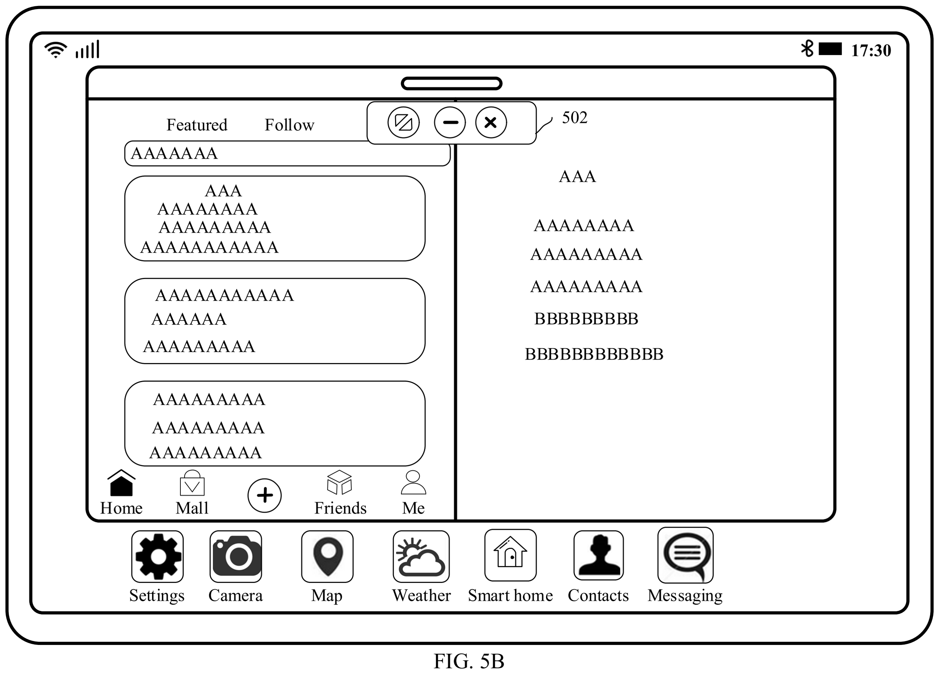

For example, with reference to FIG. 2A and FIG. 2B, as shown in FIG. 5B, after the electronic device may receive an operation of tapping the drag button 204 by the user, the electronic device may display a floating window 502 at an upper layer of the floating window 202 and an upper layer of the floating window 203.

In some examples, the electronic device may display the child window of the second window in any region between the second window and the third window. For example, with reference to FIG. 5B, the electronic device may display the floating window 502 in a top region between the floating window 202 and the floating window 203; or the electronic device may display the floating window 502 in a middle region between the floating window 202 and the floating window 203; or the electronic device may display the floating window 502 in a bottom region between the floating window 202 and the floating window 203.

It may be understood that, if the displayed child window is used to control the entire window (namely, the first window) of the application, the electronic device displays the displayed child window of the second window between the second window and the third window. This helps the user understand a function permission of the child window (that is, a function in the window is applied to the entire window of the application), and improves use experience of the user.

In another possible design, the target region may be any region on the display.

In other words, the target region not only can be any region in the region in which the first window is located, but also be a region outside the first window on the display. When the target region may be any region on the display, the child window of the second window not only has the foregoing three display manners (namely, the foregoing manner 1 to manner 3), but also may include the following two display manners (a manner 4 and a manner 5). In the manner 4, the electronic device may be in a region (which may be referred to as a first target region) outside the first window on the display. In the manner 5, the electronic device may display the child window of the second window between the first target region and the first window.

In the manner 4, in response to the first operation, the electronic device may display the child window of the second window in the first target region, that is, the child window of the second window does not cover the first window, and there is no intersection between the child window of the second window and the first window.

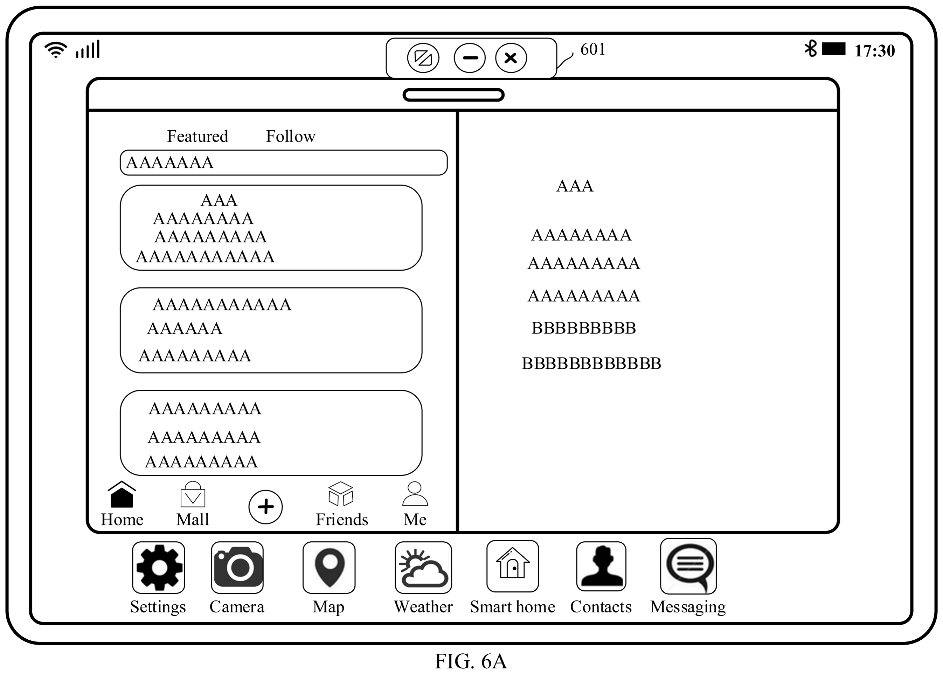

For example, with reference to FIG. 2A and FIG. 2B, as shown in FIG. 6A, after the electronic device may receive the operation of tapping the drag button 204 by the user, the electronic device may display a floating window 601 in a top region of the display.

In the manner 5, in response to the first operation, the electronic device may display the child window of the second window between the first target region and the first window, that is, the child window of the second window covers both an upper layer of the first window and an upper layer of the first target region (for example, the child window of the second window covers both the second window and the first target region, or the child window of the second window covers both the part of the region in which the third window is located and a part of the first target region, or the child window of the second window covers the part of the region in which the second window is located, the part of the region in which the third window is located, and a part of the first target region).

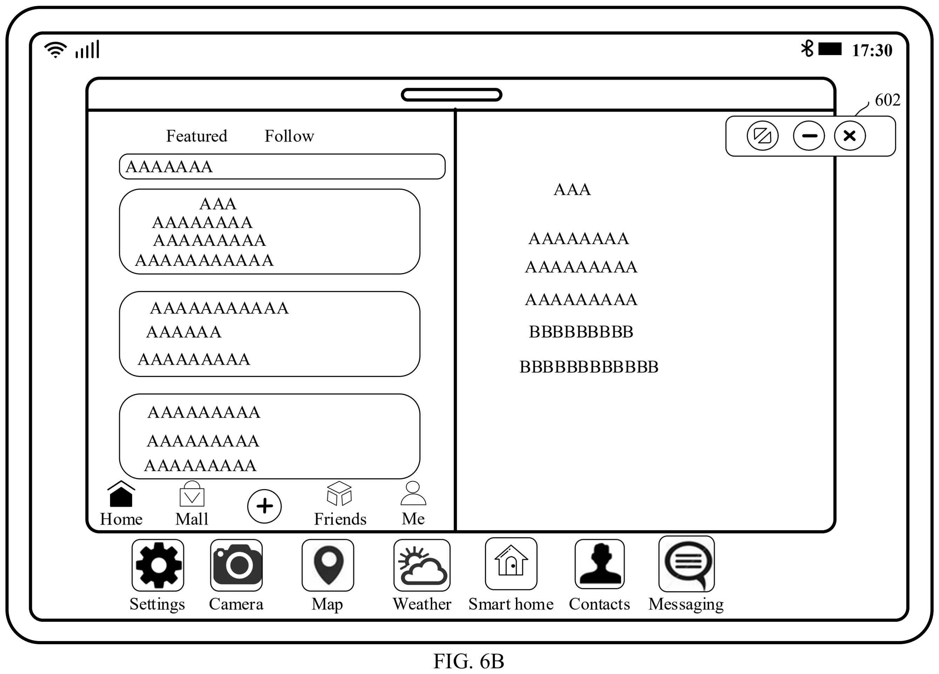

For example, with reference to FIG. 2A and FIG. 2B, as shown in FIG. 6B, after the electronic device may receive the operation of tapping the drag button 204 (or a drag button 504) by the user, the electronic device may display a floating window 602 between the third window and the first target region.

It may be understood that the electronic device displays the child window of the second window in any region on the display, to be specific, not only can display the child window of the second window in the first window, but also display the child window of the second window in the first target region. In this way, a display region of the display can be fully used, and blocking between windows can be reduced, thereby improving use experience of the user.

In some examples, this application is described in the foregoing embodiments by using an example in which a button having a management function for the first window is displayed in the child window. The following describes this application by using an example in which the child window and the parent window display application interfaces of a same application.

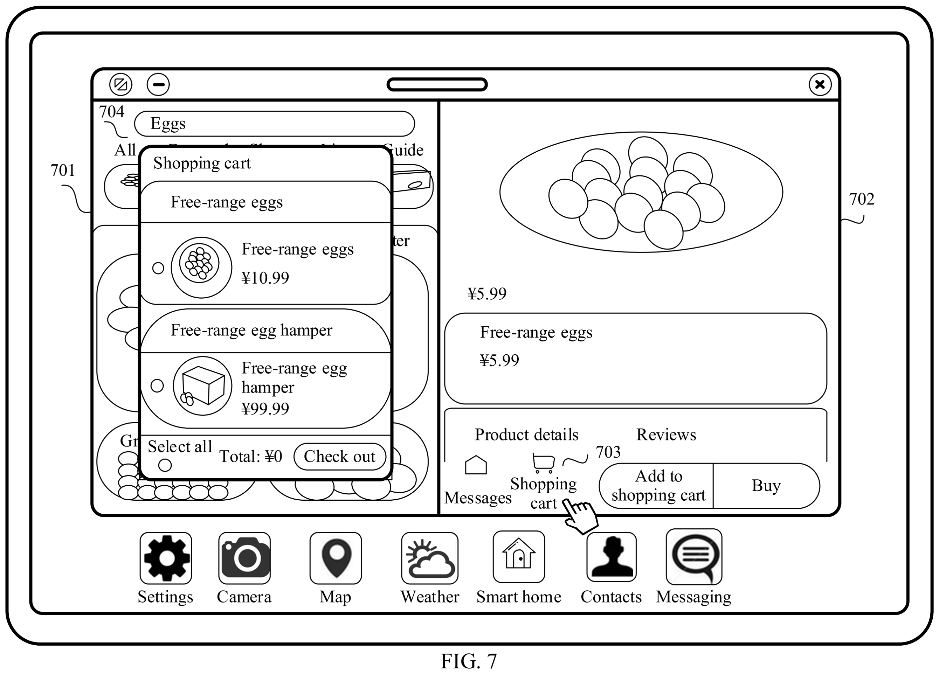

For example, as shown in FIG. 7, the electronic device displaying an application interface of a shopping application is used as an example. The electronic device may display a floating window 701 and a floating window 702. The floating window 701 displays a commodity browsing interface, the floating window 702 displays a commodity information interface, and the floating window 702 further includes a shopping cart button 703. In response to an operation on the shopping cart button 703, the electronic device may display a floating window 704 at an upper layer of a region in which the floating window 701 is located, where the floating window 704 displays a shopping cart interface.

It should be noted that, in FIG. 7, the floating window 704 is displayed at the upper layer of the region in which the floating window 701 is located only in an example manner. A display region of the floating window 704 is not limited in this embodiment of this application. For details, refer to descriptions of displaying, by the electronic device, the child window of the second window in the foregoing embodiment. Details are not described herein again.

In the foregoing embodiment, the display region and the display interface for displaying the child window of the second window are described merely in an example manner. This is not limited in this embodiment of this application. The following uses an example in which the child window of the second window includes the button having the management function for the first window (as shown in FIG. 5A), to describe a window size for displaying the child window of the second window.

In this embodiment of this application, the electronic device may display the child window, of a first preset size, of the second window, where the first preset size is less than or equal to a size of the first window, or the first preset size is less than or equal to a size of the display.

In a possible design, the window size may include a length of the window and a width of the window; and that the first preset size is less than or equal to the size of the display may include: a width of the child window of the second window is less than or equal to a width of the display, and a height of the child window of the second window is less than or equal to a height of the display; or that the first preset size is less than or equal to the size of the first window may include: a width of the child window of the second window is less than or equal to a width of the first window, and/or a height of the child window of the second window is less than or equal to a height of the first window.

In other words, both the width and the height of the child window of the second window are less than or equal to those of the first window; or the width of the child window of the second window is less than or equal to the width of the first window, or the height of the child window of the second window is less than or equal to the height of the first window. The following describes this embodiment of this application by using an example in which both the width and the height of the child window of the second window are less than or equal to those of the first window.

For example, assuming that the width of the first window is 10 and the height of the first window is 5, the width of the child window of the second window may be 8 and the height of the child window of the second window may be 4.

Optionally, the window size may further include an area of a window. In other words, that the first preset size is less than or equal to the size of the display may further include: an area of the child window of the second window is less than or equal to an area of the display; or that the first preset size is less than or equal to the size of the first window may further include: an area of the child window of the second window is less than or equal to an area of the first window.

In a possible implementation, when the first preset size is less than or equal to the size of the first window, the target region may be any one of the region in which the second window is located and the region in which the third window is located.

In other words, when the size of the child window of the second window is less than or equal to the size of the first window, the child window of the second window may be displayed in the region in which the first window is located based on the first preset size.

In another possible implementation, when the first preset size is less than or equal to the size of the display, the target region may be any region on the display.

In other words, when the size of the child window of the second window is less than or equal to the size of the display, the child window of the second window may be displayed in any region on the display based on the first preset size.

It should be noted that, in this embodiment of this application, the child window may be displayed in the parent window or any region outside the parent window, and the size of the child window may be large. In this way, if a display location is inappropriate, display content in a part of regions of the electronic device may be blocked, affecting use experience of the user.

In some embodiments, the electronic device may move the child window of the second window, to adjust the display region of the child window of the second window. The electronic device may receive a second operation performed on the child window of the second window, where the second operation is used to move the child window of the second window; and in response to the second operation, control the child window of the second window to move, where a movement region of the child window of the second window may include a region in which the first window is located and a region outside the first window.

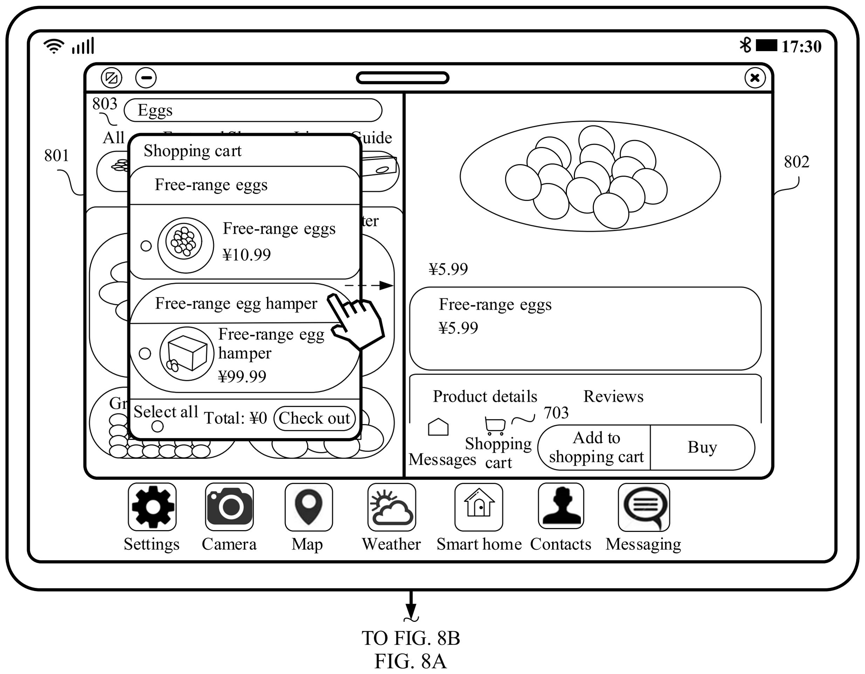

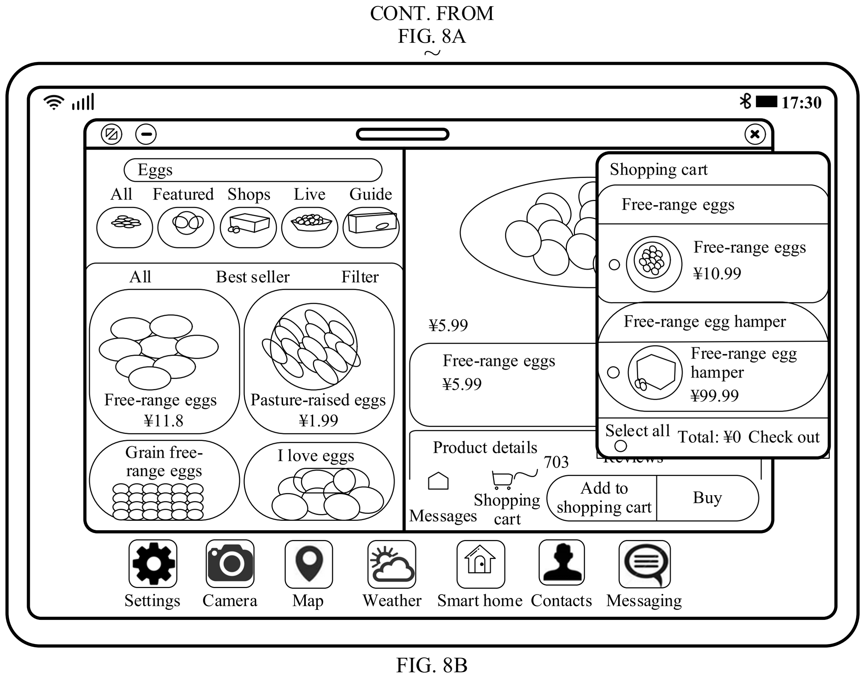

For example, as shown in FIG. 8A and FIG. 8B, the electronic device displaying an application interface of a shopping application is used as an example. The electronic device may display a floating window 801, a floating window 802, and a floating window 803. The floating window 803 is located at an upper layer (namely, a target region) of a region in which the floating window 801 is located. The floating window 801 displays a commodity browsing interface, the floating window 802 displays a commodity information interface, and the floating window 803 displays a shopping cart interface. In response to a drag operation on the floating window 803, the electronic device may move the floating window 803 to a right-side region (namely, a first region) of the floating window 802. In this way, the electronic device may simultaneously display the commodity browsing interface, the commodity information interface, and the shopping cart interface, so that the user can simultaneously view related information without frequently switching the interface (for example, after adding a commodity to a shopping cart, the user can simultaneously view a total amount in the shopping cart), thereby improving use experience of the user.

It may be understood that the electronic device may change the display region of the child window of the second window in response to the operation of the user. This enhances operability of the user, thereby improving use experience of the user.

In some embodiments, to avoid movement of the child window caused by an accidental touch of the user, the electronic device may set whether to allow movement of the child window. The electronic device may receive an enable operation performed on a preset movement button, to enable movement of the child window of the second window, where the preset movement button is used to control whether to allow movement of the child window.

In other words, after the electronic device receives the enable operation performed on the preset movement button, the user may move the child window of the second window by performing the operation.

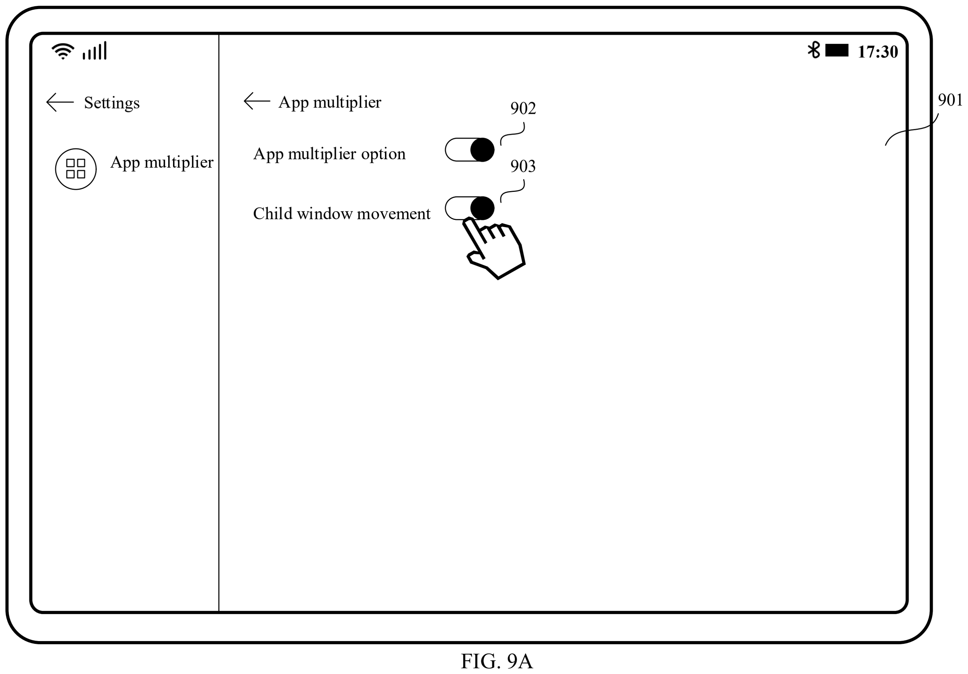

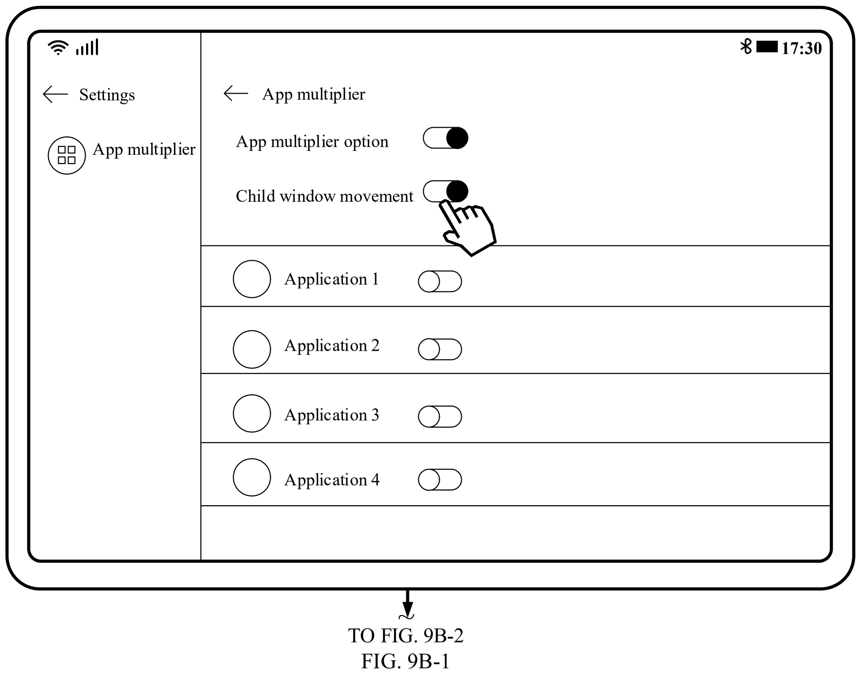

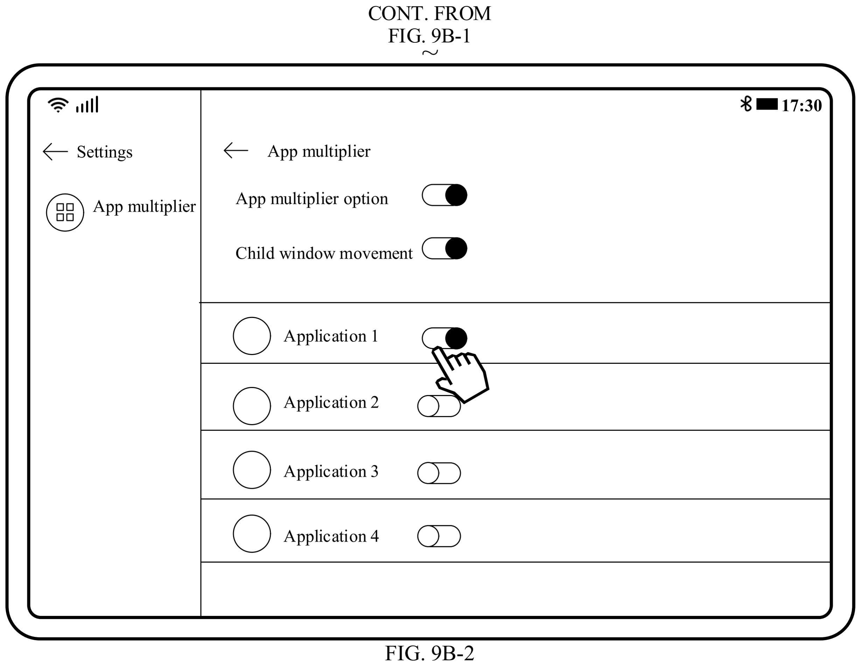

For example, as shown in FIG. 9A, the electronic device may display an app multiplier setting interface 901. The app multiplier setting interface 901 may include an app multiplier option button 902 and a child window movement button 903. The child window movement button 903 includes an on state and an off state. The on state indicates that the child window can be moved, and the off state indicates that the child window cannot be moved. The electronic device may receive an enable operation performed by the user on the child window movement button 903, and set a state of the child window movement button 903 to the on state.

Optionally, the electronic device may receive a disable operation performed on the preset movement button, and disable movement of the child window of the second window. In other words, after the electronic device receives the disable operation performed on the preset movement button, the user cannot move the child window of the second window by performing the operation.

It may be understood that the preset movement button is set, so that the electronic device may enable or disable, based on the operation of the user, a function of moving the child window. In this way, the user can set, based on an actual requirement, the function of moving the child window, thereby improving use experience of the user.

Optionally, after the electronic device receives the enable operation performed on the preset movement button, the electronic device may display a first interface, where the first interface includes at least one application movement button, one application movement button corresponds to one application, and the application movement button is used to control whether to allow movement of a child window of the application. The electronic device receives an enable operation performed on an application movement button of a first application, and may enable movement of a child window of the first application, where the first application is any one of an application corresponding to the at least one application movement button.

For example, as shown in FIG. 9B-1 and FIG. 9B-2, the electronic device may display an app multiplier setting interface 901. The app multiplier setting interface 901 may include an app multiplier option button 902 and a child window movement button 903. The electronic device may receive an enable operation performed by the user on the child window movement button 903, and the electronic device may display an "application 1" button, an "application 2" button, and an "application 3" button. In response to an enable operation performed by the user on the "application 1" button, the electronic device allows movement of a child window of the application 1.

It should be noted that the foregoing is an implementation of setting movement of the child window provided in this embodiment of this application, and the implementation of setting movement of the child window is not limited in this embodiment of this application. For example, the user may further set movement of the child window in a voice manner (for example, the user inputs a voice "enable a movement function of the child window of the application 1").

It may be understood that the electronic device displays the application movement button, so that the user can set movement functions of child windows for different applications. In this way, the user can set, based on an actual requirement, functions of moving child windows of different applications, thereby improving use experience of the user.

In some embodiments, the electronic device may adjust the size of the child window of the second window, to adjust the display region covered by the child window of the second window. The electronic device may receive a third operation, where the third operation is used to adjust the size of the child window of the second window. The electronic device may adjust the size of the child window of the second window to a target size in response to the third operation, where the target size is different from the size of the child window of the second window before adjustment.

For example, with reference to FIG. 7, in response to a minimize operation on the floating window 704 (for example, two fingers touch the display and simultaneously slide toward an inner side of the window, or the user pulls a window border), the electronic device may minimize the floating window 704. Alternatively, in response to a maximize operation on the floating window 704 (for example, two fingers touch the display and simultaneously slide toward an outer side of the window), the electronic device may maximize the floating window 704 (not shown in the figure).

In this embodiment of this application, the target size is different from the first preset size. The target size may be greater than the first preset size, or the target size may be less than the first preset size. In addition, in this embodiment of this application, when the first preset size is less than or equal to the size of the first window, the target size is less than or equal to the size of the first window; or when the first preset size is less than or equal to the size of the display, the target size is less than or equal to the size of the display.

It may be understood that the electronic device may adjust, by adjusting the size of the child window of the second window, the display region covered by the child window of the second window. In this way, the user can flexibly adjust the size of the child window displayed by the electronic device, to prevent the child window from blocking another window, thereby improving use experience of the user.

In some embodiments, to avoid a change in the size of the child window caused by an accidental touch of the user, the electronic device may set whether to allow adjustment of the size of the child window. The electronic device may receive an enable operation performed on a preset adjustment button, to enable adjustment of the size of the child window of the second window, where the preset adjustment button is used to control whether to allow adjustment of the size of the child window.

In other words, after the electronic device receives the enable operation performed on the preset adjustment button, the user may adjust the size of the child window of the second window by performing the operation.

For example, as shown in FIG. 10, the electronic device may display an app multiplier setting interface 1101. The app multiplier setting interface 1101 may include an app multiplier option button 1102 and a child window size adjustment button 1103. The child window size adjustment button 1103 includes an on state and an off state. The on state indicates that the size of the child window can be adjusted, and the off state indicates that the size of the child window cannot be adjusted. Optionally, the app multiplier setting interface 1101 may further include the child window size adjustment button. The electronic device may receive an enable operation performed by the user on the child window size adjustment button 1103, and set a state of the child window size adjustment button 1103 to the on state.

Optionally, the electronic device may receive a disable operation performed on the preset adjustment button, and disable adjustment of the child window of the second window. In other words, after the electronic device receives the disable operation performed on the preset adjustment button, the user cannot adjust the size of the child window of the second window by performing the operation.

It may be understood that the preset adjustment button is set, so that the electronic device can enable or disable, based on the operation of the user, a function of adjusting the size of the child window. In this way, the user can set, based on an actual requirement, the function of adjusting the size of the child window, thereby improving use experience of the user.

Optionally, after the electronic device receives the enable operation performed on the preset adjustment button, the electronic device may display a second interface, where the second interface includes at least one application adjustment button, one application adjustment button corresponds to one application, and the application adjustment button is used to control whether to allow adjustment of a size of a child window of the application. The electronic device receives an enable operation performed on an application adjustment button of a second application, and may enable adjustment of a size of a child window of the second application, where the second application is any one of an application corresponding to the at least one application adjustment button.

For example, as shown in FIG. 11A and FIG. 11B, the electronic device may display an app multiplier setting interface 1101. The app multiplier setting interface 1101 may include an app multiplier option button 1102 and a child window size adjustment button 1103. The electronic device may receive an enable operation performed by the user on the child window size adjustment button 1103, and the electronic device may display an "application 1" button, an "application 2" button, and an "application 3" button. In response to an enable operation performed by the user on the "application 2" button, the electronic device allows movement of a child window of the application 2.

It should be noted that the foregoing is an implementation of setting a function of adjusting the size of the child window provided in this embodiment of this application, and the implementation of setting the function of adjusting the size of the child window is not limited in this embodiment of this application. For example, the user may set the size of the child window by inputting a specific width and a specific height.

It may be understood that the electronic device displays the application adjustment button, so that the user can set size adjustment functions of child windows for different applications. In this way, the user can set, based on an actual requirement, functions of adjusting sizes of child windows of different applications, thereby improving use experience of the user.

In some embodiments, the electronic device may restore the display manner of the child window to being attached to the parent window for displaying. The child window of the second window may include a display switching button, and the display switching button is used to switch the display manner of the child window of the second window to an initial display manner. The initial display manner is that the child window of the second window is displayed in a preset region based on a second preset size, the preset region is an upper-layer region of the region in which the second window is located, and the second preset size is less than the size of the second window. In other words, the electronic device may display the child window of the second window in the region in which the second window is located in the initial display manner.

In this embodiment of this application, the electronic device may receive an operation performed on the display switching button, adjust the size of the child window of the second window and/or a display region of the child window of the second window, and display the child window, of the second preset size, of the second window in the preset region.

For example, as shown in FIG. 12A and FIG. 12B, the electronic device may display a floating window 1201, a floating window 1202, and a floating window 1203, and the floating window 1203 is displayed at an upper layer of the floating window 1201 and an upper layer of the floating window 1202. The floating window 1203 is a child window of the floating window 1201 (for example, a pop-up window is triggered by tapping a drag button in the floating window 1201), and a width of the floating window 1203 may be 12, and a height of the floating window 1203 may be 6. The floating window 1203 may include a display switching button 1204. In response to an operation performed by the user on the display switching button 1204, the electronic device may display the floating window 1203 at an upper layer of the floating window 1201 in an initial display manner. In the initial display manner, the width of the floating window 1203 may be 6, and the height of the floating window 1203 may be 4.

Optionally, the electronic device may further display, in the preset region by receiving a gesture operation of the user, the child window, of the second preset size, of the second window. For example, the electronic device may receive a slide-up operation performed by the user on the child window of the second window, and display the child window of the second window in the initial display manner.

Optionally, when the electronic device displays the child window of the second window in the initial display manner, the electronic device may receive an operation performed on the display switching button, adjust the size of the child window of the second window and/or the display region of the child window of the second window, and display the child window, of the first preset size, of the second window in the target region.

It may be understood that the electronic device may switch a display manner of the child window of the second window by performing the operation on the display switching button. In this way, convenience of switching the display manner of the child window by the user can be improved.

In some other embodiments, the electronic device may display the second window, and display the child window of the second window in the initial display manner. Then, the electronic device may receive a fourth operation performed on the second window, where the fourth operation is used to trigger displaying of the second window in an app multiplier mode; and in response to the fourth operation, the electronic device may display the first window, and display the child window of the second window in the target region, where the first window includes the second window and the third window, and the second window and the third window are landscape-displayed in the app multiplier mode.

It should be noted that the fourth operation is not limited in this embodiment of this application. For example, the fourth operation may be dragging a border of the second window. For another example, the fourth operation may be a voice operation (for example, "landscape-display the application a in the app multiplier mode").

For example, as shown in FIG. 13A and FIG. 13B, the electronic device displays a floating window 1301 and a floating window 1302, and the floating window 1302 is a child window of the floating window 1301. Then, the electronic device may receive a drag operation performed by the user on a border of the floating window 1301, to suspend the floating window 1301 and a floating window 1303 in the app multiplier mode, where the floating window 1302 is located at an upper layer of the floating window 1301 and an upper layer of the floating window 1303.

It may be understood that, when the electronic device displays one parent window and a child window is in the parent window, if the electronic device displays the parent window in the app multiplier mode, a display region of the child window may be adjusted. In this way, a layout between windows can be improved, thereby prompting use experience of the user.

It should be noted that the foregoing embodiment describes the manner of displaying the child window by the electronic device and the operation on the child window. The following describes a principle of displaying the child window by the electronic device in this application. Currently, the electronic device limits the size of the child window, so that the child window can be displayed only in a region of the parent window (namely, the foregoing initial display manner). An Android TM operating system is used as an example. The electronic device may limit the size of the child window in an applyGravityAndUpdateFrame method.

For example, as shown in FIG. 14A, in response to an operation of adding a window by the user, a window management service module (for example, WindowManagerService) may invoke a performance function (for example, performSurfacePlacement or performSurfacePlacementLoop) to refresh a window layout, and indicate a window layer placement module to refresh a display bit region of the window. Then, the window layer placement module (for example, WindowSurfacePlacer) may indicate a screen management module to traverse all regions on the display. The screen management module (for example, DisplayPolicy) may indicate a window container module to compute the size of the window and the display region of the window. The window container module (for example, WindowState) may compute the display region of the window based on a client layout parameter. For example, DisplayPolicy may invoke a computeFrameLw method to compute layout adjustment, and invoke an applyGravityAndUpdateFrame method through WindowState to limit the size of the child window. For example, as shown in FIG. 14B, in the applyGravityAndUpdateFrame method of the Android TM operating system, when setting the width of the child window, a client sets matchParent for the child window. In the applyGravityAndUpdateFrame method, if it is identified that the child window is set to matchParent, the width and the height of the child window are set to be equal to the width and the height of the parent window. If the parent window is not displayed in full screen, a minimum value between the width and the height of the parent window and the width and the height applied by the application is obtained. When a LAYOUT_IN_PARENT field is configured in the floating window, the size of the child window and the display region are limited to the region of the parent window.

In some embodiments, the electronic device may modify a limitation condition for the child window. After the electronic device receives the first operation performed on the second window, the electronic device may execute a first event, where the first event is used to trigger adjustment of a limitation condition on the child window of the second window, and the limitation condition is used to constrain the size of the child window of the second window; and the adjusted limitation condition includes: the size of the child window of the second window is less than or equal to the size of the first window or the size of the child window of the second window is less than or equal to the size of the display.

In this embodiment of this application, after the electronic device executes the first event, the electronic device may display the child window of the second window in the target region.

In a possible design, the first event may include at least one of the following: a first sub-event, a second sub-event, and a third sub-event.

The first sub-event is: if receiving first information, the electronic device does not set the size of the child window of the second window to the first information, where the first information indicates that the size of the child window of the second window matches the second window. For example, the first information may be matchParent.

The second sub-event is: if the second window is not a full-screen window, the electronic device adjusts the limitation condition on the child window of the second window.

The third sub-event is: if there is second information in window information of the child window of the second window, the electronic device adjusts the limitation condition on the child window of the second window, where the second information indicates that a window is a child window. For example, the second information may be a LAYOUT_IN_PARENT field configured in the floating window.

It should be noted that the first event is applicable to an operating system such as an Android TM operating system, a HarmonyOS TM operating system, or an iOSTM operating system. The Android TM operating system is used as an example. The electronic device may add the first event to the applyGravityAndUpdateFrame method.

It may be understood that, the limitation condition on the child window of the second window is adjusted, so that the size of the child window of the second window is limited within the region of the first window or the display, thereby expanding the display region of the child window of the second window. In this way, display diversity of the child window of the second window can be increased, thereby improving use experience of the user.

It should be noted that, if the electronic device displays the child window, the limitation condition on the child window is adjusted, which may increase a load of the electronic device.

In some embodiments, the electronic device may determine, based on the window information of the child window, whether to adjust the limitation condition on the child window. After the electronic device receives the first operation performed on the second window, the electronic device may obtain the window information of the child window of the second window, where the window information includes window type information, a width/height ratio, and a preset display region, and the window information is window information sent by the application corresponding to the child window (or the second window) of the second window. Then, the electronic device may determine whether the window information of the child window of the second window meets a preset condition. If the window information meets the preset condition, the electronic device executes the first event, where the preset condition includes at least one of the following: the window type information is preset type information, the width/height ratio is greater than a preset ratio threshold, the preset display region is not within a range of the region in which the second window is located, and the preset type information indicates that a window type is a child window type.

It should be noted that the preset ratio threshold is not limited in this embodiment of this application. For example, the preset ratio threshold may be 2:1, 3:1, 4:1, or the like.

In some examples, if the width/height ratio is greater than the preset ratio threshold, it indicates that the electronic device displays the second window and the third window in parallel (that is, landscape-displays two windows).

For example, assuming that the preset ratio threshold is 2:1, the window type information indicates that the window type is the child window type, the width/height ratio is 3:1, and the preset display region is not within the range of the region in which the second window is located, the electronic device may display the child window of the second window in any region on the display.

Optionally, if the window information does not meet the preset condition, the electronic device does not execute the first event, and displays the child window of the second window in the initial display manner.

It may be understood that, when the window type information indicates that the window type is the child window type, the width/height ratio is greater than the preset ratio threshold, and the preset display region is not within the range of the region in which the second window is located, the electronic device may enable the child window of the second window to be displayed in the target region, so that the child window is not attached to the parent window for displaying, thereby increasing display diversity of the child window.

In some embodiments, the electronic device may determine, based on the application corresponding to the child window, whether to adjust the limitation condition on the child window.

In a possible implementation, the electronic device stores an application trustlist, where the application trustlist indicates an application that is allowed to display a child window in the target region (that is, allowed to adjust the limitation condition on the child window of the application in the application trustlist). The electronic device may obtain the application trustlist. Then, the electronic device may determine whether there is the target application in the application trustlist, where the target application is an application corresponding to the application interface displayed in the second window. If there is the target application in the application trustlist, the electronic device executes the first event. If there is no target application in the application trustlist, the electronic device does not execute the first event, and displays the child window of the second window in the initial display manner.

It should be noted that the application trustlist may be set by the user (for example, an application is selected in a system setting interface), or the application trustlist may be set by a developer. This is not limited in this embodiment of this application.

It may be understood that, the application trustlist is used, the electronic device may selectively adjust limitation conditions on child windows of a part of applications. In this way, a load of the electronic device can be reduced, and resource consumption can be reduced.

In some embodiments, the electronic device may determine, based on a triggering manner of the child window, whether to adjust the limitation condition on the child window. The electronic device may obtain fourth information, where the fourth information indicates a triggering manner of the child window of the second window. If the fourth information indicates that the child window of the second window is triggered by the user, the electronic device executes the first event. If the fourth information indicates that the child window of the second window is not triggered by the user, the electronic device does not execute the first event, and displays the child window of the second window in the initial display manner.

It should be noted that the window not triggered by the user may be a window of an advertisement type, a window actively sent by a server, or the like. This is not limited in this embodiment of this application.

It may be understood that, whether the child window is triggered by the user is determined, so that the electronic device adjusts only the limitation condition on the child window triggered by the user. In this way, a limitation condition on a window (for example, an advertisement window) that is not triggered by the user may be avoided from being adjusted, thereby reducing resource consumption of the electronic device.

In some embodiments, the electronic device may adjust the limitation condition on the child window when the first window is displayed in the app multiplier mode. After the electronic device receives the first operation performed on the second window, the electronic device may obtain window mode information of the first window, where the window mode information is first mode information (which may also be referred to as third information) or second mode information. The first mode information indicates that displaying is performed in the app multiplier mode, and the second mode information indicates that displaying is not performed in the app multiplier mode. Then, if the window mode information is the first mode information, the electronic device executes the first event; or if the window mode information is the second mode information, the electronic device does not execute the first event, and displays the child window of the second window in the initial display manner.

Optionally, the first mode information indicates that landscape-displaying is performed in the app multiplier mode, and the second mode information indicates that landscape-displaying is not performed in the app multiplier mode.

It may be understood that when the electronic device displays the window in the app multiplier mode, the electronic device may simultaneously display two window pages of one application. In this way, the electronic device adjusts the display manner of the child window, so that the child window can be flexibly displayed (for example, displayed at an upper layer of two windows), thereby improving use experience of the user.

In some examples, when the application is displayed in a floating window in the app multiplier mode, one application corresponds to one application task stack (task), one application task stack may include at least one activity (activity), and one activity corresponds to one main window (namely, a parent window). In addition, windows in one application stack have a level relationship. When two windows overlap, a high-level window may cover a low-level window. In addition, a level of the child window inherits a level of the parent window. In this way, when the electronic device displays two windows in the app multiplier mode, if the level of the parent window corresponding to the child window is low, even if the display region of the child window may be enlarged, the child window may still be covered by another window, causing incomplete displaying of the child window.

For example, as shown in FIG. 15, the electronic device may display a floating window 1501 and a floating window 1502, the floating window 1501 includes a drag button 1503, and a level of the floating window 1501 is lower than a level of the floating window 1502. The electronic device may receive an operation of tapping the drag button 1503 by the user, and display a floating window 1504 at an upper layer of the floating window 1501 and a lower layer of the floating window 1502, that is, a part of the floating window 1504 is covered by the floating window 1502.

In some embodiments, the electronic device may determine, by determining a level relationship between windows, a window for creating the child window. After the electronic device receives the first operation performed on the second window, the electronic device may generate a window creation event by using the second window, where the window creation event is used to trigger creation of the child window of the second window. Then, the electronic device may obtain window level information by using the second window, where the window level information indicates a level relationship between the second window and the third window; and if the window level information indicates that the second window is at an upper layer of the third window, the electronic device executes the window creation event by using the second window.

Optionally, if the window level information indicates that the third window is at an upper layer of the second window, the electronic device sends the window creation event to the third window by using the second window, and executes the window creation event by using the third window.

For example, with reference to FIG. 15, assuming that an activity level list is maintained in an ActivityThread of the client at an application framework layer, level information (for example, topActivity information of each window) of windows (for example, the floating window 1501 and the floating window 1502) in a same application stack may be updated. If topActivity information of the floating window 1501 indicates that an activity corresponding to the floating window 1501 is at a top of a stack, a pop-up window may be displayed for the activity corresponding to the floating window 1501, that is, the floating window 1501 may execute the window creation event (the electronic device may display the interface shown in FIG. 5B, that is, display the floating window 502 at the upper layer of the floating window 202 and the upper layer of the floating window 203). If the topActivity information of the floating window 1502 indicates that an activity corresponding to the floating window 1502 is at the top of the stack, a pop-up window may be displayed for the activity corresponding to the floating window 1502, that is, the floating window 1501 may send the window creation event to the floating window 1502, and the floating window 1502 executes the window creation event (the electronic device may display the interface shown in FIG. 5B, that is, display the floating window 502 at the upper layer of the floating window 202 and the upper layer of the floating window 203).

It may be understood that the electronic device determines the level relationship between the second window and the third window by using the window level information; and if the window level information indicates that the second window is at the upper layer of the third window, it indicates that a level relationship of the child window created in the second window is higher than that of the third window. In this way, the electronic device executes a window creation event by using the second window, so that the child window of the second window can be completely displayed at an upper layer of the second window and the upper layer of the third window, thereby improving use experience of the user. If the window level information indicates that the third window is at the upper layer of the second window, it indicates that a level relationship of the child window created in the second window is lower than that of the third window. In this way, the electronic device may send a window creation event to the third window by using the second window, and execute the window creation event by using the third window, so that the child window of the second window can be completely displayed at the upper layer of the second window and the upper layer of the third window, thereby improving use experience of the user.

It should be noted that when the application is displayed in the floating window in the app multiplier mode, a title bar (captionView) corresponding to an application stack is also formed by splicing two title bars. For example, with reference to FIG. 2A and FIG. 2B, it may be learned that the region in which the floating window 201 is located is an application task stack, the region in which the floating window 202 is located is an activity, and the region in which the floating window 203 is located is an activity. A region in which the drag button 204 is located is a title bar corresponding to the floating window 202, and a region in which the drag button 205 is located is a title bar corresponding to the floating window 203. In other words, the floating window 201 visually includes only one title bar. Actually, the title bar of the floating window 201 is formed by splicing the title bar corresponding to the floating window 202 and the title bar corresponding to the floating window 203, and the drag button is also formed by splicing the drag button 204 and the drag button 205.

In this way, when the user performs an operation on one of the title bars, another title bar does not synchronously respond to the operation. For example, when the user operates a drag button of one window, a drag button of another window does not respond to the operation. For example, with reference to FIG. 2A and FIG. 2B, when the user performs a tap operation on the drag button 204, the drag button 204 may be adjusted to a user touch state (for example, change a color), and the drag button 205 does not respond to the tap operation, and no corresponding adjustment is performed. As a result, states of the two drag buttons cannot be synchronized, and visual experience of the user is affected.

In some embodiments, when an application is displayed in a floating window in an app multiplier mode, after the user performs an operation on a window, the electronic device may synchronize an operation event to another window. The second window includes a first drag button, and the third window includes a second drag button. The electronic device may receive, by using the second window, an operation performed on the first drag button, and generate a state change message, where the state change message indicates to adjust a state of a drag button, and the state of the drag button includes at least one of the following: a button size, a button shape, and a button color; and then, in response to the state change message, the electronic device adjusts a state of the first drag button to a target state by using the second window. In addition, the electronic device may send the state change message to the third window. In response to the state change message, the electronic device may adjust a state of the second drag button to the target state by using the third window.

It should be noted that adjusting the state of the drag button is not limited in this embodiment of this application. For example, the electronic device may increase a size of the drag button; or the electronic device may increase the size of the drag button from small to large, and change the button color of the drag button from white to blue; or the electronic device may change the button shape of the drag button from an ellipse to a circle.

For example, with reference to FIG. 2A and FIG. 2B, as shown in FIG. 16, in response to an operation (for example, a tap operation) on a drag button 1601, colors of the drag button 1601 and a drag button 1602 may change from white to black, and sizes of the drag button 1601 and the drag button 1602 be increased.

It may be understood that, after receiving the operation performed on the first drag button, the electronic device not only can adjust the state of the first drag button, but also send the state change message to the third window, so that the electronic device can adjust the state of the second drag button, thereby ensuring state synchronization between the first drag button and the second drag button, and improving visual experience of the user.

In the foregoing embodiment, this application is described by using an example in which the electronic device displays the child window in a floating window app multiplier mode. Similarly, this application may alternatively be used in a scenario in which the child window is displayed in another mode. For example, the following describes this application by using an example in which the electronic device displays the first window in full screen.

In some embodiments, the electronic device displays the first window in full screen in the app multiplier mode, where the first window is a full-screen window; and the first window may include the second window and the third window that are displayed in parallel; and in response to the first operation performed on the second window, the electronic device may display the child window of the second window, and the child window of the second window may be displayed in any region in the region in which the first window is located.

In some examples, the child window of the second window may be displayed at the upper layer of the region in which the second window is located (that is, the child window of the second window covers the part of the region in the second window); or the child window of the second window may be displayed at the upper layer of the region in which the third window is located (that is, the child window of the second window covers the part of the region in which the third window is located); or the child window of the second window may be displayed at an upper layer of the region in which the second window is located and the region in which the third window is located (that is, the child window of the second window covers the part of the region in which the second window is located and the part of the region in which the third window is located).

For example, as shown in FIG. 17, the electronic device may display a window 1701, a window 1702, and a window 1703, the window 1703 is a child window of the window 1701, and the window 1703 covers a region in which the window 1702 is located and a region in which the window 1703 is located.

In some other embodiments, when the electronic device does not display the first window in the app multiplier mode, in response to the first operation performed on the second window, the electronic device may display the child window of the second window in the target region.

In some examples, the electronic device may display the second window and the third window in split screens, and the second window and the third window display interfaces of different applications. The second window may cover the part of the region in which the second window is located and the part of the region in which the third window is located; or the second window may cover the part of the region in which the second window is located; or the second window may cover the part of the region in which the third window is located.

The foregoing mainly describes the solutions provided in embodiments of this application from a perspective of the electronic device. It may be understood that, to implement the foregoing functions, the electronic device includes a corresponding hardware structure and/or software module for performing the functions. A person skilled in the art should be easily aware that, with reference to steps of the window display method described in embodiments disclosed in this application, this application can be implemented in a form of hardware or a combination of hardware and computer software. Whether a function is performed by hardware or hardware driven by electronic device software depends on particular applications and design constraints of the technical solutions. A person skilled in the art may use different methods to implement the described functions for each particular application, but it should not be considered that the implementation goes beyond the scope of this application.

In embodiments of this application, a window display apparatus may be divided into functional modules or functional units based on the foregoing method examples. For example, each functional module or functional unit may be obtained through division based on a corresponding function, or two or more functions may be integrated into one processing module. The integrated module may be implemented in a form of hardware, or may be implemented in a form of a software functional module or functional unit. In embodiments of this application, division into modules or units is an example, and is merely logical function division. During actual implementation, another division manner may be used.

Some embodiments of this application provide an electronic device (the tablet computer 200 shown in FIG. 3). The electronic device may include a memory and one or more processors. The memory is coupled to the processor. The electronic device may further include a camera. Alternatively, the electronic device may be connected to an external camera. The memory is configured to store computer program code. The computer program code includes computer instructions. When the processor executes computer instructions, the electronic device may perform functions or steps performed by the mobile phone in the foregoing method embodiments. For a structure of the electronic device, refer to the structure of the tablet computer 200 shown in FIG. 3.

An embodiment of this application further provides a chip system. As shown in FIG. 18, the chip system includes at least one processor 1801 and at least one interface circuit 1802. The processor 1801 and the interface circuit 1802 may be connected to each other through a line. For example, the interface circuit 1802 may be configured to receive a signal from another apparatus (for example, a memory of the electronic device). For another example, the interface circuit 1802 may be configured to send a signal to another apparatus (for example, the processor 1801). For example, the interface circuit 1802 may read instructions stored in the memory, and send the instructions to the processor 1801. When the instructions are executed by the processor 1801, the electronic device (the tablet computer 200 shown in FIG. 3) may be enabled to perform the steps in the foregoing embodiments. Certainly, the chip system may further include another discrete component. This is not specifically limited in this embodiment of this application.

An embodiment of this application further provides a computer-readable storage medium. The computer-readable storage medium includes computer instructions. When the computer instructions are run on the foregoing electronic device (for example, the tablet computer 200 shown in FIG. 3), the electronic device is enabled to perform the functions or steps performed by the mobile phone in the foregoing method embodiments.

An embodiment of this application further provides a computer program product. When the computer program product runs on a computer, the computer is enabled to perform the functions or steps performed by the mobile phone in the foregoing method embodiments.

Based on the descriptions of the foregoing implementations, a person skilled in the art may clearly understand that, for a purpose of convenient and brief description, division into the foregoing functional modules is merely used as an example for description. During actual application, the foregoing functions may be allocated to different functional modules and implemented based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk, a read-only memory (read-only memory, ROM), a random access memory (random access memory, RAM), a magnetic disk, or an optical disc.

The foregoing content is merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A window display method, wherein the method comprises:
displaying a first window of a target application in response to an operation of starting the target application, wherein the first window comprises a second window and a third window that are displayed in parallel;
receiving a first operation performed on the second window, wherein the first operation is used to trigger displaying of a child window of the second window; and
displaying the child window of the second window in response to the first operation, wherein
the child window of the second window covers a part of a region in which the second window is located and a part of a region in which the third window is located.

2. The method according to claim 1, wherein displaying the child window of the second window comprises:
displaying the child window, of a first preset size, of the second window, wherein the first preset size is less than or equal to a size of the first window, or the first preset size is less than or equal to a size of a display.

3. The method according to claim 2, wherein that the first preset size is less than or equal to the size of the first window comprises: a width of the child window of the second window is less than or equal to a width of the first window, and/or a height of the child window of the second window is less than or equal to a height of the first window; or
that the first preset size is less than or equal to the size of the display comprises: a width of the child window of the second window is less than or equal to a width of the display, and a height of the child window of the second window is less than or equal to a height of the display.

4. The method according to any one of claims 1 to 3, wherein the method further comprises:
receiving a second operation performed on the child window of the second window, wherein the second operation is used to move the child window of the second window; and
in response to the second operation, enabling the child window of the second window to move with the second operation, wherein a movement region of the child window of the second window comprises a region in which the first window is located and a region outside the first window.

5. The method according to claim 4, wherein the method further comprises:
receiving an enable operation performed on a preset movement button, to enable movement of the child window of the second window, wherein the preset movement button is used to control whether to allow movement of the child window.

6. The method according to claim 5, wherein after receiving the enable operation performed on the preset movement button, the method further comprises:
displaying a first interface, wherein the first interface comprises at least one application movement button, one application movement button corresponds to one application, and the application movement button is used to control whether to allow movement of a child window of the application; and
receiving an enable operation performed on an application movement button of a first application, to enable movement of a child window of the first application, wherein the first application is any one of an application corresponding to the at least one application movement button.

7. The method according to any one of claims 1 to 6, wherein the method further comprises:
receiving a third operation, wherein the third operation is used to adjust a size of the child window of the second window; and
adjusting the size of the child window of the second window to a target size in response to the third operation, wherein the target size is different from the size of the child window of the second window before adjustment.

8. The method according to claim 7, wherein the method further comprises:
receiving an enable operation performed on a preset adjustment button, to enable adjustment of the size of the child window of the second window, wherein the preset adjustment button is used to control whether to allow adjustment of the size of the child window.

9. The method according to claim 8, wherein after receiving the enable operation performed on the preset adjustment button, the method further comprises:
displaying a second interface, wherein the second interface comprises at least one application adjustment button, one application adjustment button corresponds to one application, and the application adjustment button is used to control whether to allow adjustment of a size of a child window of the application; and
receiving an enable operation performed on an application adjustment button of a second application, to enable adjustment of a size of a child window of the second application, wherein the second application is any one of an application corresponding to the at least one application adjustment button.

10. The method according to any one of claims 1 to 9, wherein the child window of the second window comprises a display switching button, the display switching button is used to trigger the child window of the second window to be displayed in a preset region based on a second preset size, the preset region is an upper-layer region of the region in which the second window is located, and the second preset size is less than a size of the second window; and the method further comprises:
receiving an operation performed on the display switching button, adjusting the size of the child window of the second window and/or a display region of the child window of the second window, and displaying the child window, of the second preset size, of the second window in the preset region.

11. The method according to any one of claims 1 to 10, wherein after receiving the first operation performed on the second window, the method further comprises:
executing a first event, wherein the first event is used to trigger adjustment of a limitation condition on the child window of the second window, and the limitation condition is used to constrain the size of the child window of the second window; and
the adjusted limitation condition comprises: the size of the child window of the second window is less than or equal to the size of the first window, or the size of the child window of the second window is less than or equal to the size of the display.

12. The method according to claim 11, wherein the first event comprises at least one of the following:
if first information is received, skipping setting the size of the child window of the second window to the first information, wherein the first information indicates that the size of the child window of the second window matches the second window;
if the second window is not a full-screen window, adjusting the limitation condition on the child window of the second window; or
if there is second information in window information of the child window of the second window, adjusting the limitation condition on the child window of the second window, wherein the second information indicates that a window is a child window.

13. The method according to claim 11 or 12, wherein after receiving the first operation performed on the second window, the method further comprises:
obtaining the window information of the child window of the second window, wherein the window information comprises window type information, a width/height ratio, and a preset display region; and
executing the first event comprises:
if the window information meets a preset condition, executing the first event, wherein
the preset condition comprises at least one of the following: the window type information is preset type information, the width/height ratio is greater than a preset ratio threshold, the preset display region is not within a range of the region in which the second window is located, and the preset type information indicates that a window type is a child window type.

14. The method according to any one of claims 11 to 13, wherein after receiving the first operation performed on the second window, the method further comprises:
obtaining window mode information of the first window; and
executing the first event comprises:
if the window mode information is third information, executing the first event, wherein the third information indicates to perform displaying in an app multiplier mode.

15. The method according to any one of claims 11 to 14, wherein after receiving the first operation performed on the second window, the method further comprises:
obtaining an application trustlist, wherein the application trustlist indicates an application that is allowed to display a child window in a target region, and the target region is the part of the region in which the second window is located and the part of the region in which the third window is located; and
executing the first event comprises:
if the target application is in the application trustlist, executing the first event.

16. The method according to any one of claims 11 to 15, wherein after receiving the first operation performed on the second window, the method further comprises:
obtaining fourth information, wherein the fourth information indicates a triggering manner of the child window of the second window; and
executing the first event comprises:
if the fourth information indicates that the child window of the second window is triggered by a user, executing the first event.

17. The method according to any one of claims 1 to 16, wherein after receiving the first operation performed on the second window, the method further comprises:
generating a second event by using the second window, wherein the second event is used to trigger creation of the child window of the second window;
obtaining window level information by using the second window, wherein the window level information indicates a level relationship between the second window and the third window; and
if the window level information indicates that the second window is at an upper layer of the third window, executing the second event by using the second window.

18. The method according to claim 17, wherein the method further comprises:
if the window level information indicates that the third window is at an upper layer of the second window, sending the second event to the third window by using the second window, and executing the second event by using the third window.

19. The method according to any one of claims 1 to 18, wherein the second window comprises a first drag button, and the third window comprises a second drag button; and the method further comprises:
receiving, by using the second window, an operation performed on the first drag button, and generating a state change message, wherein the state change message indicates to adjust a state of a drag button, and the state of the drag button comprises at least one of the following: a button size, a button shape, and a button color;
in response to the state change message, adjusting a state of the first drag button to a target state by using the second window;
sending the state change message to the third window; and
in response to the state change message, adjusting a state of the second drag button to the target state by using the third window.

20. The method according to any one of claims 1 to 19, wherein the first window is a floating window or a full-screen window.

21. The method according to any one of claims 1 to 20, wherein the second window and the third window display different interfaces of the target application.

22. An electronic device, wherein the electronic device comprises a memory, a display, and one or more processors, the memory and the display are coupled to the processor, the memory is configured to store computer program code, and the computer program code comprises computer instructions; and when the computer instructions are executed by the one or more processors, the electronic device is enabled to perform the method according to any one of claims 1 to 21.

23. A computer-readable storage medium, comprising computer instructions, wherein when the computer instructions are run on an electronic device, the electronic device is enabled to perform the method according to any one of claims 1 to 21.

24. A computer program product, wherein when the computer program product runs on a computer, the computer is enabled to perform the method according to any one of claims 1 to 21.
